# EUROPEAN PATENT APPLICATION

(11) **EP 4 191 945 A1**
(43) Date of publication of application: **07.06.2023**
(21) Application number: 21386077.8
(22) Date of filing: 08.12.2021
(51) Int. Cl.: H04L 9/40

(54) **METHODS OF LINKING DATA WITH A TOKEN ASSOCIATED WITH A USER ACCOUNT, METHODS OF SUPPLYING RELEVANT CONTENT, AND SERVERS AND COMPUTER SOFTWARE CONFIGURED TO PERFORM THE METHODS**

(30) Priority: 06.12.2021 EP 21386074
(71) Applicant: Vodafone Group Services Limited, Newbury RG14 2FN (GB)
(72) Inventor: Piperakis, Michail, London, W2 6BY (GB); Jones, Gareth, London, W2 6BY (GB); Joy, Jobin, London, W2 6BY (GB); Harmer, William, London, W2 6BY (GB)
(74) Representative: Boult Wade Tennant LLP

(57) **Abstract**

A method of a server 100 enabling a client 130 to link data with a token associated with a user account is provided. The method comprises receiving a first token associated with the user account. The method further comprises determining a stable alias associated with the token, wherein the stable alias is associated with the user account. The method further comprises determining a second token associated with the stable alias. The method further comprises providing the second token to the client 130. One of the first token and the second token are associated with data, such that providing the second token to the client enables the client to link the other of the first token and the second token with the data, without knowledge of the stable alias.

## Description

### Field of the Invention

The present invention relates to management of tokens associated with user accounts. In particular, the invention relates to relates to provision of transient tokens that are anonymously linked to data collected about user accounts.

### Background

Network security is an important consideration for users and for servers handling user traffic (such as websites). In an open network (such as the Internet), third-parties may be able to intercept traffic and track user activity. This can lead to unauthorised third-parties gathering user data that could compromise user security. One way in which a user can reduce this risk and improve their security online is by remaining anonymous when interacting across a network. However, many interactions with servers require a user to have an identifier, so that stateful interactions can take place between the user and the server. Methods exist for assigning temporary tokens to users, which allow the user to remain anonymous, whilst having a temporary identity that is required to enable certain functionality.

In order for a server to effectively meet the needs of the user, the server may need to store some data about the user. However, the data can only be stored in association with the token (as this is the only identifier available to the server). Therefore, if the user is assigned a new temporary token, the server will not be able to identify the user and will be unable to access the data.

One method that servers provide a consistent service, despite changing user tokens, is by using cookies. The server stores their own token on the user device and uses this to re-identify the user when they return to the service.

In some circumstances, the data stored about the user may be shared with another server and the other server may need to be able to use this data when the user interacts with that server. This can be challenging as the temporary token assigned to the user may be different in respect of the interactions with each server. Therefore, to provide a means of linking the data to the user, the servers may request that the user store a "third-party cookie", which identifies the user consistently to each of the servers and is accessible by both. However, these cookies have drawbacks as the desired anonymity of the user is compromised by having an identifier accessible to multiple parties. Therefore, the security and privacy of the user may be eroded by these techniques.

Some use cases in which it is desirable to store data about a user, while ensuring the user remains anonymous, include website analytics, user preference settings, and content recommendations.

A further specific use case of intelligent provision of content is advertising. Rather than simply displaying generic advertising, content providers aim to display advertising content that is relevant to the particular user. In order to do so, they require access to data about the user. Advertising on digital channels, both owned and third-party media, is largely controlled by dominant market suppliers (such as Google RTM, Amazon RTM, Facebook RTM & Apple RTM). Other companies involved have traditionally relied on identifying users via login or via matching IDs stored in cookies. The former approach is reliant on a user actively logging in and so is unreliable and requires the user to share a personally identifiable piece of data (either their email, phone number or other sensitive data point). The latter approach is less accurate as it relies on matching identifiers across different domains. Moreover, browsers are moving towards blocking third-party cookies that enable this approach. It is therefore desirable to:
1) continue to accurately identify individual visitors (returning to the same site and across different authorised sites);
2) enable access to many different content providers, without requiring a subscription to service provided by the dominant suppliers (allowing smaller ecosystem players to compete with the dominant players);
3) provide transparency and control to users in the process; and
4) refocus digital marketing to activation of first-party data (i.e. data that a brand or publisher owns, rather than data scraped from internet).

US2009006349 describes methods of intercepting web traffic and providing targeted content to users within web pages. Targeted content may be based on a referrer web page, referrer content, the requested url, requested content, meta tags, search terms, form field data, user profile data and user behaviour. The targeted content may comprise an advertisement, a link, a news article, or a tag.

Methods provided in this document rely on providing a platform in the communication path between the user and the requested page, so that targeted content may be inserted.

WO2013190334 relates to modification of browser sessions. This document describes an intermediate entity configured to route browser session traffic between a subscriber client device and a wider network. The intermediate entity is configured with for modifying browser traffic (e.g. by modifying a cookie in a request, adding data to the request, adding an advert to the response, and/or removing unsuitable content from the response).

The intermediate entity communicates with a subscriber profile database to lookup data relating to a given subscriber client device and/or associated subscriber. This lookup is performed on the basis of a unique identifier associated with the subscriber client device (e.g. MSISDN or IMEI).

As with US2009006349, the intermediate entity must be in the communication path between the subscriber client device and the server entity. Moreover, in order to access data relating to the subscriber client device, the intermediate entity must be in possession of identifying data relating to the subscriber client device. This requires that the intermediate entity is located within the service provider network. Using identifying data to access user data for the purposes of modifying content can create security problems.

WO2017064511 describes an intermediate network device modifying network requests by inserting a rotating network identifier (which may be an anonymous random string that is correlated with data via a mapping). The rotating network identifier is associated with data originating from the service provider network for a predetermined time by a mapping. A data broker uses the mapping to provide data to a server device outside of the service provider network, based on the mapping between the network identifier and data originating from the service provider network. Alternatively, the mapping may map the network identifier to a subscriber identifier (e.g. IMSI or IMEI), being useable to query data sources within the service provider network.

As with US2009006349, an intermediate network device in the communication path is required to insert the network identifier into the request. As with WO2013190334, the data is only accessible from within the service provider network. The data broker may retrieve the data only if a second network identifier equal to the first network identifier is received in the data request.

WO2019038537 describes a method of facilitating targeted content delivery in a network. The method comprises accessing user profile data from a user profile database and receiving, from a demand side platform via the network, segment definition data comprising a list of user attributes and attribute values associated with a given targeted content delivery process. The method further comprises determining, for each user identified, to include the user in a list of candidate users to be targeted if user attribute values of the user match user attribute values from the received list.

In order to implement the system, a network device is located in the wider network between the demand side platform and an entity located in the routing fabric of the service provider network. The network device is arranged to communicate a list of user identifiers to the entity. The entity is responsible for facilitating delivery of targeted content to subscriber devices in the service provider network and is arranged to place content in the traffic that flows between the wider network and the service provider network.

The entity in the service provider network is arranged to receive the user identifiers communicated from the network device and facilitate the delivery of targeted content for the targeted content delivery process in the service provider network on the basis of (at least) the received user identifiers. The entity may use the received identifiers to identify one or more candidate users to be targeted in the given targeted content delivery process. Facilitation of the delivery of targeted content involves the insertion of identifiers into data packets such that content may be delivered to subscriber devices.

The entity in the service provider network receives segment definition data from the network device. The entity is arranged to, identify, on the basis of subscriber data available to the entity and for each user identified in the subscriber data using the user identifiers that are communicated by the network device, whether the user is to be included in a list of subscribers to be targeted in the given targeted content delivery process.

As with other prior art documents, the network device must be located in communication path. The system also requires an entity in the communication path that is located in the routing fabric of the service provider network.

WO2021144573 describes a method for providing subscriber data stored at a service provider network to an entity outside of the service provider network (e.g. a content provider), without providing the device with an identity of the subscriber.

A network identifier (e.g. a random string in the form of a token) is inserted by a subscriber device into network requests sent by the subscriber device. A content server exchanges network requests and responses with the subscriber device to provide content. A network request may comprise a request for an advertisement to be displayed along with content provided by content server.

The service provider network includes an intermediate network device and a data broker. The intermediate network device is configured to process or route network requests, such as browser session traffic. A network request may relate to a portion of a requested web-page, e.g. may be a request for content (e.g. advertising data/content) from an entity that differs from an entity that is supplying the webpage. The data broker may comprise access subscriber data stored at a data storage accessible to the service provider network.

The subscriber device generates first and second network identifiers. The subscriber device sends a first network request comprising the first network identifier to an entity external to the service provider network and a second network request comprising the second network identifier to an intermediate network device in the service provider network. The first network request may be a browser request for a portion of webpage, for example a request for an advertisement to be rendered in a webpage received from the content server.

The first network identifier and second network identifier are configured such that they may be used in performing a verification process to verify whether it is permissible for subscriber data stored internally in the service provider network to be provided to an entity external to service provider network, for example to a content provider.

The intermediate network device in the service provider network obtains a subscriber identifier relating to the subscriber device. A data broker uses the subscriber identifier to obtain data originating in the service provider network related to the subscriber identifier and provides at least a portion of the subscriber data and the second network identifier to a server outside the service provider network.

To obtain data, a DSP makes a request for subscriber data. The server performs a verification process using the first network identifier and the second network identifier and sends a network response comprising at least a portion of the data to the DSP.

As with prior art discussed above, this document relies on an intermediate network device in the service provider network. Moreover, this document requires that the subscriber device initiates a second network request to transfer data from within the service provider network to a server outside of the service provider network.

### Summary

Against this background, a method of a server enabling a client to link data with a token associated with a user account is provided. The method comprises receiving a first token associated with the user account. The method further comprises determining a stable alias associated with the token, wherein the stable alias is associated with the user account. The method further comprises determining a second token associated with the stable alias. The method further comprises providing the second token to the client. One of the first token and the second token are associated with data, such that providing the second token to the client enables the client to link the other of the first token and the second token with the data, without knowledge of the stable alias.

In one example, the first token may be associated with data. The server may receive the first token (and optionally also receive the data relating to the user account). The server may determine the stable alias associated with the first token, determine a second token associated with the stable alias, and provide the second token to the client (optionally, along with the data relating to the user account). In this way, providing the second token to the client enables the client to link the second token with the data, without knowledge of the stable alias.

As a result, the server may receive a first token and substitute the first token for a second token. The first token may be received from a first entity of the client (such as a data management platform, DMP) and provided to a second entity of the client (such as a demand side platform, DSP). The second token may be a more useful token to the DSP. For example, the DSP may subsequently receive a message in relation to a user account (e.g. from a supply side platform, SSP), wherein the message comprises a third token related to a user account. The DSP may be able to decrypt the third token to provide the second token. In doing so, the DSP determines that the third token is associated with the same user account as the second token. The server has already translated the first token (with which the data was originally associated) to the second token so the DSP has already linked the second token to the data. Therefore, the DSP is able to link the third token with the data and determine appropriate action to take in response to the message, based on the linked data.

In another example, the second token may be associated with data. The server may receive the first token from the client, determine the stable alias associated with the first token, determine a second token associated with the stable alias, and provide the second token to the client. In this way, providing the second token (associated with the data) to the client enables the client to link the first token with the data, without knowledge of the stable alias.

The client may be a DSP of the client or a DMP of the client, for example.

The server may send the second token (and optionally the data) to a second client (such as an SSP of a publisher). The second client may decrypt the third token to determine the second token.

The proposed method provides a process for linking tokens with other tokens, which are in turn linked to data. The proposed method enables a client to determine more information about a user account that is behind an anonymous token, without knowledge of any information that would compromise the security of the user account.

The proposed method further enables clients to use the linked data when responding to user action associated with a token. In many cases, the token (which may be the only thing the client knows about the user account) does not link directly to useful data. Therefore, without linking further data, the client may have to take a generic action in response to user activity linked with the token. The method therefore enables a client to take action based on linked data, rather than simply taking generic action.

The method may be a computer-implemented method. By providing a computer-implemented (automated) method, the client can make decisions quickly, based on the linked data. When a user makes a request associated with a token, the client may quickly respond with actions based on the data linked to the user account.

As a result of the proposed methods, information about a user associated with one token, can be used when a different token associated with the user is available. This case may arise because the first token, second token, or one or more other tokens, is a session-specific token, a domain-specific token or because the time to live (TTL) of the token has been exceeded, for example.

A "token" may be a text and/or numeric string that is associated with exactly one user account. In other words, each token is unique and associated with a single user account (although a user account can be associated with many different tokens). The token may be considered as an alias for the user account. In other words, the token itself may not identify the user account (to any entity other than the server that generated and assigned the token to the user account). In other words, it may not be possible for other entities in the network to determine identifying data about the user account from the token alone.

The server may keep a record of the tokens it has generated and assigned to user accounts. The server may therefore be able to determine identifying information about the user account (such as an internal account identifier). Alternatively, the server may not be able to determine identifying information about the user account but may be able to link the token to a stable alias associated with the user account (such as a hashed internal account identifier, as explained below).

A token may be associated with a user account in a time-limited sense. In other words, the token may be a transient token that is used to consistently denote a user account for a limited period (such as one session or a fixed time interval).

The second token, or one or more other tokens provided to the client may be one, some or all of the tokens associated with the stable alias. Preferably, the server only provides a subset of the tokens associated with the stable alias. The particular subset of tokens that are provided may depend on the permissions of the client. For example, the client may be permitted to receive tokens associated with a stable alias as long as the tokens were generated and issued to that specific client. This would enable the client to provide a user with a consistent experience on their own website but would not reveal to the client any tokens that have been issued in respect of other clients (such as other brands). As a result, the client would not be able to link data collected by other clients with their own data. If a client were able to consolidate all data gathered in respect of a user account then they may be able to identify the user (by a process known as "fingerprinting"). By preventing data linking across clients, the proposed method can restrict the volume of data that any one client is able to amass regarding a single user account. The proposed method can therefore improve user security and privacy.

In other examples, the subset of tokens that are returned by the server may depend on properties of the first token that is supplied to the server. For example, if the first token was generated and issued to client X then the client providing the first token to the server may receive other tokens that were issued to client X, even if the client providing the first token to the server is not client X.

In yet further examples, the server may return the second token or one or more other tokens in an encrypted form. The client may have keys to some of the tokens but may only be able to link data to a token if the client has the key for that token.

The encrypted tokens may be one, some or all of the tokens linked with the stable alias. Some tokens may be returned in encrypted form, whist others may be returned in unencrypted form.

Tokens may be returned in hashed form or encrypted form. Some tokens may be returned unencrypted. For example, in some cases, a stable random token may be provided unencrypted to a Demand Side Platform (DSP).

There may be one or more users associated with the user account. For example, the user account may be a mobile data connection to a mobile device and there may be one user that uses the mobile device. In another example, the user account may be a fixed line connection to a household that provides a data connection to all the members of the household (e.g. via WiFi). Therefore, the data may relate to one individual user or may relate to multiple users. In the case that the data relates to multiple users, it may be sufficient that the data (categorisation data or activity data) relates to one of the multiple individual users using the user account.

Moreover, the methods may be applied to businesses. For example, the fixed connection of a coffee shop may supply an internet connection to many different customers. However, the invention may nevertheless allow data relating to the user activity to be linked to tokens issued and associated with the user account.

The first token may be received from the client. In some cases, the first token may be received from a first entity of the client and the second token may be provided to a second entity of the client.

The method may comprise receiving, from the client, a request for tokens associated with a user account, wherein the request comprises the first token associated with the user account.

The request may be received across a network, such as the Internet.

The client may be a brand or online publisher. The client may be configured in advance to use the service provided by the server. In some examples, the client may be a web server hosting a website that the user account is visiting.

The method may be used to link data (e.g. categorisation information about a user and/or user activity data) to a token (which may be a short-lived token) assigned to a user while browsing the internet. The token may be used by the client (such as a website provider) to determine relevant content to display to a user. Additionally or alternatively, the token may be passed to one or more third-party content suppliers, who may determine suitable content that is relevant for the user, based on the data. In this case, the client may be a third-party content provider.

The stable alias may be an obfuscated stable identifier, such as a hashed or encrypted internal account identifier. An internal account identifier may uniquely identify an account or subscription of an individual, collection of individuals (such as a household), school, university, or private or public entity. One example of an internal account identifier is a Mobile Station International Subscriber Directory Number, MSISDN.

The stable alias may be created by hashing a unique property of the user account (such as by hashing or encrypting an internal account identifier). This generates a code, which is unique to a particular user account and will not change. The stable alias may therefore be "stable" (or "static") because it is based on a unique property of the user account (internal account identifier) and will not change as long as the user account exists with the service provider.

The stable alias may be linked permanently to the user account. Alternately, the stable alias may be linked to the user account until specific action is taken to refresh the stable alias. The user account may be used by the one or more users for as long as connectivity is provided by their service provider (also referred to as network service provider or internet service provider, ISP).

In other words, stable may mean that the alias is associated with data relating to the service provider of the user account and is the same as long as the service provider is the same. The user account may be a mobile device internet connection or a fixed line connection, for example. The user account may be any kind of Internet presence or connection to the Internet.

The stable alias is an "alias" because the unique property itself (which could be considered an "identifier") may be obfuscated to form the stable alias so that knowledge of the stable alias does not reveal the unique property or identifying data relating to the user account. In other words, the stable alias is not an identifier because information that could be used to identify the user account is obfuscated by a hash or encryption function.

The stable alias may be retained on the server but not supplied to the client (even though it does not reveal identifying data about the user). This is because the stable alias does not change over time (unless it is manually refreshed) and may enable long-term tracking of the user account by the client. This is undesirable because it could be difficult for the user to prevent that specific client from being able to link data associated with the user account with the stable alias.

There exists a problem in existing methods for linking data to user accounts. Current methods sometimes use third-party cookies, which enable desirable certain functionality but are stored on the user device and may allow websites to track users indefinitely, often without the knowledge of the user. The proposed solution enables the desirable functionality that is provided by third-party cookies, without enabling websites to track users indefinitely.

When the client determines what action to take in response to user activity linked to the first token, the action may be to display content that is relevant to the user, based on the linked data. If the user data were not linked to the first token, the user may spend more time browsing the website before finding content that is relevant to them. Advantageously, the proposed methods therefore enable clients to identify content that is relevant to the user earlier. This may mean that less content must be displayed to the user overall (before finding relevant content) and therefore the clients may operate more efficiently.

The first token, second token and/or one or more other tokens may be short-lived tokens. This can mean that the token has a "time to live" associated with it. The "time to live" of the token may be extended by certain events (such as repeated use of the token).

Alternatively, the token may expire on termination of a particular connection or when a session expires. For example, the token may expire as soon as the user's browsing session is terminated.

The first token, second token and/or one or more other tokens may comprise one or more marketing tokens (which may be used for enabling own media cases, such as analytics, personalisation and audience creation), one or more advertising token (which may be used for enabling programmatic advertising use cases, such re-targeting, prospecting, analytics, cost optimisation, frequency capping and cost optimisation) and/or one or more random tokens (which may be used to generate other tokens and/or used as an internal identifier to link other tokens together). One example of a random token is a UUID.

A random token may be generated as a 128-bit label using universally unique identifier (UUID) or globally unique identifier (GUID) standards. The server may store the random token in association with a unique stable alias of the user account, such as a hashed internal account identifier. The random token may be random in the sense that it is randomly generated, rather than generated based on other tokens or properties relating to the user account but may nevertheless be a stable (consistent) token, rather than being randomly generated each time it is used. A marketing token may be created by hashing the random token along with other parameters (for example by using a SHA256 algorithm). An advertising token may be created by encrypting the random token (for example, using a symmetric block cipher algorithm, such as AES).

The first token may be a marketing token, which may be used to identify repeat visits by a user account to a website for site optimisation; delivery of personalised experience; enhanced analytics and/or consistency of user experience.

The marketing token issued to the brand may remain valid for as long as the user has given consent for the brand to retain data linked to the marketing token. A new marketing token may be issued to a brand if the user has at some point chosen to deactivate a particular brand (and therefore reset the user identity) and then have revisited the brand website later and opted in to using the marketing token. The new marketing token will be different and the old marketing token will not be reissued.

In some cases, the marketing token may have a fixed Time to Live (TTL). When the TTL expires, the marketing token expires and a new marketing token is issued next time the user visits the brand/publisher. Alternatively, the marketing token may have a Time to Live that is extended every time the user revisits the brand/publisher.

The second token may be a random token. Linking the data to a random token may be advantageous because an advertising token may be decrypted to provide a random token.

The third token may be an advertising token, which may be used by content suppliers to provide content (such as averts) that is relevant to the user account, based on segment data about the user account that can be linked to the advertising token using the service provided by the server.

The advertising token may be refreshed (in other words it is different) every time it is requested for use. In some cases, the advertising token may be requested once per browser session.

In one example, a client (e.g. a DMP of a brand) may determine segment data comprising a first token (e.g. marketing token), based on user activity. The DMP may provide the first token to the server, which may return a second token (e.g. a random token) to the client (e.g. a DSP of the brand). The DSP may supply content to a SSP, based on the data. When an opportunity to supply content is presented by the SSP, the DSP may receive a third token (e.g. an advertising token) from the SSP. The DSP may derive the random token by decrypting the advertising token using a private key. The random token may be the same in both cases (because the user account to which the advertising token relates is the same as the user account to which the marketing token and associated data relates) and may allow the DSP to link the segment data to the opportunity and provide appropriate content.

In a further example, the server may receive data (such as segment identifiers) from the client, along with the first token (e.g. marketing token or advertising token).

The DSP may be required to keep the random token secret to prevent other clients linking tokens and data via a token associated with the stable alias.

The stable alias may be a hashed internal account identifier. Alternatively, the stable alias may be a random token, such as a UUID. In some cases, the random token is fixed and does not change, in which case, it may be considered as a stable alias. In other cases, it may be possible to refresh the random token.

The proposed methods may be useful in networks other than the internet. For example, the invention may be used to link employee data to tokens associated with the employee in a corporate network. The proposed methods may be applied to any network where tokens associated with a user account are available to network entities (instead of information that would identify the user account) and where tokens may be linked to data, as will be appreciated by the skilled person.

By providing an automated process for linking tokens with other tokens, which are in turn linked to data, the proposed methods enable decisions regarding what relevant content to display to users to be made very quickly. When a user visits a website, the relevant content may load alongside or shortly after primary content on the webpage.

The user account may be an anonymous user account. In other words, the token and the linked data do not reveal any information that would enable identifying data about the user account (such as an internal account identifier). Moreover, the tokens and linked data may not reveal information that would enable identification of one or more users that use the user account. This may enable the one or more users to remain private. Moreover, this may improve security because sensitive information about the user account and one or more users is not revealed.

The stable alias may not identify the user account. The stable alias may provide a means for recognising that data relating to user activity or user categorisation may relate to the same user account as a short-lived token assigned to that user account. The data may therefore be used to determine relevant content for the user account associated with the short-lived token.

Receiving the first token may comprise receiving data relating to the user account. The data may comprise the first token. The method may further comprise manipulating the data by replacing the first token with the second token so that the manipulated data comprises the second token. Providing the second token to the client may comprise providing the manipulated data comprising the second token to the client.

The data may comprise one or more of: categorisation data; and user activity data.

Categorisation data may provide an indication of the user's interests. For example, the categorisation data may indicate that the user is interested in electric vehicles. Categorisation data may alternatively/additionally provide an indication of a demographic of a user, such as an age or age bracket. Categorisation data may be referred to as "segment data".

Segment data may take the form of a plurality of categories, each represented by a segmentlD. The categories may indicate interests of users placed in that category. For example, a first segmentlD may denote a category of users that are interested in electric vehicles. There may be a plurality of tokens associated with the first segmentlD, indicating that the user accounts associated with those tokens are all share the interest denoted by the segmentlD (so they may all be interested in electric vehicles).

The data may be obtained by receiving input from the user. For example, the user may indicate that certain articles, products, services etc. are of interest to them by adding them to a "favourites" list.

The data may be obtained by tracking user activity. For example the data may indicate what elements in a website a user has clicked on or how long a user spent engaging with a webpage. User activity data may also be called "tracking data".

The data may indicate what content has already been displayed to a user. It may be undesirable to display content to a user that they have already seen multiple times. Therefore, the data may track a number of times content has been displayed to a user. This data may be termed "frequency data".

The data may indicate other aspects of the activity of the user account. For example, the data may indicate the number of times the token associated with the user account has been seen by the client (in other words, the number of times they have visited the website or how many different pages on the website they have visited). Moreover, the data may indicate a length of time the user account has spent browsing a website.

Where the token relates to relevant content, the data may indicate how many times the user account has interacted with relevant content that is displayed to them (such has how many times they have clicked on relevant content to learn more). This may provide a metric of success for how relevant the content is to the user's interests.

The data may have been obtained by the content provider and used to determine further content to provide to the user. In this case, the proposed methods provide a way for the content provider to gather user data on one visit and use that user data next time the user visits the website, without requiring a cookie to be stored on the user device.

Alternatively, the data may have been obtained by a first content provider on a visit to the first content provider's website and stored in association with a token. The user may subsequently visit a website hosted by a second content provider. The first content provider may supply content to the website of the second content provider (such as via a process of header bidding). The website hosted by the second content provider may supply the first content provider (and other content providers bidding to supply content) with a different token. Through use of the proposed methods, the first content provider can link the data stored in association with a token to the different token supplied by the second content provider.

Content providers (including the first content provider) may be able to determine, based on linking tokens with data, relevant content to supply to the second content provider. Moreover, one or more content providers may each supply a score to the second content provider. The score may indicate how relevant their content is to the user, based on the data. Based on scores received from a plurality of content providers, the second website may determine which content provider should supply content to be displayed to the user.

The method may further comprise generating one or more tokens associated with the user account (for example, the method may comprise generating the first token, the second token and/or the third token). The method may further comprise providing the one or more generated tokens to the client and/or one or more other clients.

The method may further comprise storing each of the one or more tokens in association with the stable alias.

The server may generate a random token using a random generator and store a mapping between the random token and the stable alias (such as the hashed internal account identifier). The server may generate one or more marketing tokens and/or one or more advertising tokens based on the random token.

Providing the one or more generated tokens to the client and/or one or more other clients may comprise providing the first token to the client. The client may generate data about the user account and store the data in association with the first token. The data may be stored in association with the first token in a Data Management Platform.

When a user account accesses a website hosted by the client, the client may request a token from the server. The server may generate the first token in response to the request and send it to the client. The client may send the first token to the server and receive the second token (and optionally one or more other tokens) in response. The client may thereby use the second token to determine that the data stored in association with the second token relates to the same user account as one or more other tokens, *such that the second token enables the client to link the one or more other tokens with the data.* As a result, the client may offer a consistent user experience. This may be used to store favourites, user preferences, settings, and the like.

Providing the one or more generated tokens to the client and/or one or more other clients may further comprise providing a third token to a second client. The second client may be a host of a website that provides primary content and relevant secondary content alongside the primary content (such as a publisher). The first client may be a supplier of secondary content to the second client (such as a brand purchasing advertising space on the publisher website).

When a user account accesses the website of the second client, the second client may request a token from the server. The server may generate the third token in response to the request and send it to the second client. The second client may offer the first client an opportunity to provide secondary content to the user, alongside the primary content. The second client may provide the third token to the first client as part of the offer.

The first client may send the third token to the server and receive the second token (and optionally one or more other tokens) in response. The first client may thereby use the second token to determine that the data relates to the same user account as the third token, *such that the second token enables the client to link the third token with the data.*

Alternatively, the first client may decrypt the third token to produce the second token. The first client may use the second token to determine that the data relates to the same user account as the third token, *such that the second token enables the client to link the third token with the data.*

In other words, the second token of the one or more tokens may be used as a temporary key to link an anonymous user account to data gathered about the user's internet activity (determining what their user's interests are and their behaviour, without determining who they are). One or more of the tokens may be used to link the anonymous user account to an agreement to supply relevant content (such as a temporary token assigned when they visit a website and agree to the website's terms). By linking the data with the agreement to supply relevant content, the content supplier (first client) may determine what content to display to the user. In one example, the second client may be a content provider such as an online newspaper and may offer website real estate (space alongside their articles that will be displayed to the user) to one or more content providers (including the first client).

The third token may be an advertising token. The second token may be a marketing token or a random token.

In another example, a user account may visit a website hosted by the first client and be allocated a first token. As above, the first client may store data relating to the user account in association with the first token. The first client may send the first token to the server (optionally, along with the data). The server may translate the first token to the second token and send the second token to the first client (optionally, along with the data). The server may receive the first token from a first entity of the first client (e.g. a DMP) and provide the second token to a second entity of the first client (e.g. a DSP). The data is then linked to the second token and may be used when the user account visits another website (hosted by another client) to which the first client supplies content.

Accordingly, a method of a server enabling a first client to link data with a third token associated with a user account is provided. The method comprises receiving, from the first client, a first token associated with the user account, wherein the first token is associated with data. The method further comprises determining (by the server) a stable alias associated with the first token, wherein the stable alias is associated with the user account. The method further comprises determining (by the server) a second token associated with the stable alias. The method further comprises providing (by the server) the second token to the first client. The server may receive the first token from a first entity of the first client and provide the second token to a second entity of the first client.

Receiving the first token from the first client may comprise receiving the first token and the associated data. Providing the second token to the first client may comprise providing the second token and the associated data to the first client, such that the first token associated with the data is substituted for the second token.

The user account may visit a website hosted by a second client and be allocated a third token. The second client may offer the first client an opportunity to supply content to the website. The first client may receive the third token from the second client, determine the second token based on the third token and link the third token with the data. In doing so, they may link the user account with the data.

The first client may determine the second token based on the third token by decrypting the third token to provide the second token. This may be performed using a key received from the server. Alternatively, the first client may generate a pair of keys and send a first of the pair of keys to the server. The server may use the first of the pair of keys to encrypt the second token and provide the third token. The first client may use the second of the pair of keys to decrypt the third token to determine the second token.

The first token may be a marketing token. The second token may be a random token. The third token may be an advertising token.

Generating one or more tokens associated with the user account may comprise generating the first token and the second token. Providing the one or more generated tokens to the client may comprise providing the first token to the client.

The client may be a first client. Generating one or more tokens associated with the user account may comprise generating a third token. Providing the one or more generated tokens to the client and/or one or more other clients may comprise providing the third token to a second client.

Generating one or more tokens may comprise encrypting another token associated with the stable alias. For example, the server may encrypt the second token to provide the third token. In a specific example, the server may encrypt a random token to provide an advertising token.

Generating one or more tokens may comprise encrypting the second token to generate the third token.

A third token (such as an advertising token) may be derived from the second token (such as a random token) using a cryptographic method and cryptographic secret. In this way, a different token (e.g. a different advertising token) may be generated each time a new token is requested. Different tokens may be generated by using different encryption parameters for the cryptographic method. Holders of the cryptographic secret may be able to re-identify the second token from the third token (or other tokens generated using the cryptographic method). As a result, the second token is available to holders of the cryptographic secret but is hidden from the wider ecosystem. For example, the publisher website to which the third token is issued may not be able to determine the second token. However, the DSP of the brand that obtains the third token via header bidding may be able to obtain the second token and link data to the third token.

Encrypting another token associated with the stable alias may comprise encrypting another token using a first key of a pair of keys. The method may further comprise receiving the first key. Alternatively, the method may further comprise generating the pair of keys and sending a second key of the pair of keys to the client.

Determining a second token and/or one or more other tokens associated with the stable alias may comprise decrypting a token (e.g. the third token) to provide another token. For example, the server may decrypt an advertising token to provide a random token.

The method may further comprise receiving (e.g. from the client) a public address associated with the user account. The method may further comprise determining the stable alias associated with the user account, based on the public address. The one or more generated tokens may be provided to the client in response to receiving the public address from the client.

The public address may comprise an IP address. The public address may further comprise a port number. The IP address associated with the user account can be a public IP address. In some cases, the user account may have a private IP address. In this case, network traffic may be sent via a NAT gateway and the IP address of the NAT gateway may be the public address, in combination with a source port of the NAT gateway. Communication between the client and the user account would take place using the IP address and port of the NAT gateway, rather than the private IP address of the user account. In this case, the IP address and port of the gateway would be considered as the "public address associated with the user account" (as this is the address that the client would use to communicate with the user account, for example via the public Internet).

Determining the stable alias associated with the public address may comprise determining a service provider of the user account by comparing the public address of the user account with a lookup table of public addresses and/or ranges of public addresses, each public address or range of public addresses being stored in association with a corresponding service provider selected from a plurality of service providers. Determining the stable alias associated with the public address may further comprise sending the public address to the corresponding service provider of the user account (such as an internet service provider, which may be a mobile service provider or a fixed-line service provider) and receiving the stable alias in response.

Alternatively, the method may further comprise receiving (e.g. from the client) a network token associated with the user account (which may be a token specifically used to obtain the stable alias from a service provider). The method may further comprise determining a service provider of the user account from a plurality of possible service providers, based on the network token. The method may further comprise sending the network token to the service provider of the user account. The method may further comprise receiving, from the service provider, the stable alias associated with the network token. The one or more generated tokens may be provided to the client in response to receiving the network token from the client.

The network token associated with the user account may be an encrypted version of the IP address. The network token may be a service provider token.

The public address may be an encrypted version of the IP address. In this case, the server may send the encrypted IP address to the service provider and receive the stable alias in response.

The network token may be an IP address (or another type of public address, which may be encrypted). An IP address allocated to a user account may remain linked to that user account for a period but then may be allocated to another user account at a later stage, as needed. When the original user account needs an IP address again, they may be allocated a different IP address. Advantageously, by providing a way of linking an IP address, which cannot be reliably linked to a single user account, with a stable alias, which can be reliably linked to a single user account, the proposed methods allow a client to link user data to an IP address, even if the IP address allocated to the user account has changed. This may be useful, for example, if the client has determined that the user associated with the user account is interested with electric vehicles. When the user visits the client's website, they may present content relating to electric vehicles in a prominent position on the webpage.

The method may further comprise receiving preferences in relation to a user account. The preferences may indicate that data stored in association with tokens provided to a particular client should not be linked to the stable alias associated with the user account. The method may further comprise disassociating one or more tokens provided to the particular client from the stable alias.

The user may indicate that they no longer wish for data generated by a particular client to be linked to their user account. Therefore, the server may disassociate all tokens issued to that client from the stable alias. Data may continue to be stored in association with the one or more tokens issued to the particular client. However, it is only by linking the one or more tokens issued to the particular client with other tokens (that may have been issued to other clients) that the data can be linked to the other tokens. By disassociating these one or more tokens from the stable alias, future requests received in respect of other tokens associated with the user account will not yield the one or more tokens required to link the data to the other tokens.

In some cases, this process may comprise disassociating one or more marketing tokens issued to a particular brand or publisher from the stable alias associated with the user account.

Disassociation may be performed with respect to tokens provided by the server. However, there could be other identifiers that the brand or the publisher have/use that could link the same data set to the user. Disassociating the tokens at the server provides user control over the linking and unlinking of tokens with the stable alias associated with the user account. In turn, if those disassociated tokens are associated with data, the data become disassociated with the stable alias from the perspective of clients relying on the server for linking data to tokens. Nevertheless, there could be other ways in which clients (such as brands and publishers) stitch data and identity together, which the server does not have control over. The data may therefore still be linkable to the user account in other ways.

If a DSP stores data in association with a token, the data may be disassociated from the user account by refreshing the token (in other words, allocating a new token to the user account). Alternatively, the token may be kept the same for the user account and the server may instruct the DSP that data stored in association with the token is no longer valid (via an API, for example). This would cause the DSP to disassociate the data from the token.

The DSP may be sent a file of consented tokens (e.g. random tokens such as UUIDs) and their associated segments regularly (e.g. daily). A DSP may disassociate a token from being used to bid for ad space on a publisher's site if it does not detect an existing token in the latest file. When the token is removed from the file, the DSP may disassociate that token from any data stored.

The method may further comprise receiving, from the particular client, a public address associated with the user account. The method may further comprise determining that the public address is associated with the stable alias of the user account. The method may further comprise, in response to determining that the public address is associated with the stable alias of the user account, not providing a token associated with the stable alias to the client.

Once a user has indicated that they do not wish to be tracked by a particular client, the server may no longer supply that client with tokens linked to the stable alias of the user. The server may therefore not return a token to the client in this case. The server, may return an empty response or may return an error.

The method may further comprise receiving preferences in relation to a user account. The preferences may indicate that data stored in association with tokens provided to all clients should not be linked to the stable alias associated with the user account. The method may further comprise disassociating every token provided to any client from the stable alias.

The method may further comprise receiving preferences in relation to a user account, wherein the preferences indicate that tokens should not be stored in association with the stable alias associated with the user account. The method may further comprise receiving, from the particular client, a public address associated with the user account. The method may further comprise determining that the public address is associated with the stable alias of the user account. The method may further comprise, in response to determining that the public address is associated with the stable alias of the user account, not generating a token, not storing a token in associating with the stable alias, and/or not providing a token associated with the stable alias to the client.

The method may further comprise receiving preferences in relation to a user account. The preferences may indicate that network identification may be undertaken. The method may further comprise receiving a public address or network token associated with the user account. The method may further comprise determining a stable alias associated with the user account, based on the public address or network token.

The method may further comprise receiving preferences in relation to a user account. The preferences may indicate that network identification may not be undertaken. The method may further comprise not determining a stable alias associated with the user account based on a public address or network token received associated with the user account.

The method may further comprise receiving preferences in relation to a user account. The preferences may indicate that a particular client should not be permitted to link a token associated with the user account with one or more other tokens associated with the user account. The method may further comprise receiving, from the particular client, a first token or public address associated with the user account. The method may further comprise determining that the first token or public address is associated with the stable alias associated with the user account. The method may further comprise returning a response to the particular client, the response comprising no other tokens associated with the stable alias.

The user preferences may indicate that a particular client should not be permitted to link a token associated with the user account with other tokens associated with the user account. Therefore, the particular client may be unable to use the server to link data associated with one or more of the tokens to the user account.

The user may consent to data being stored about them by certain clients (for example, so that they experience a consistent experience when visiting the website of that client) but may not want that data to be accessible by other clients. To achieve this, the server may retain the token issued to the permitted website stored in association with the static alias (so that the token is returned when the permitted client asks for it). However, the server may return nothing when other, not-permitted, clients provide tokens associated with the user account and request other tokens.

In a particular example, it may be determined that a user account is associated with a young user (a minor). Therefore, certain content suppliers (clients) that are known to supply content that may be unsuitable for younger users may not be permitted to link tokens relating to that user account. In some cases, a user account associated with a minor may be excluded from targeting entirely (e.g. by preventing tokens associated with that account being linked with any other tokens).

The method may further comprise receiving a request to refresh one or more tokens associated with a user account. The method may further comprise disassociating the one or more tokens from the stable alias associated with the user account. The method may further comprise generating one or more new tokens. The method may further comprise storing the one or more new tokens in association with the stable alias.

Certain tokens (such as stable random tokens) may persist for a longer time than other tokens (for example they may be set to refresh every 60 days or 90 days). A user may wish to disassociate activity in this period from their user account. This can be achieved by refreshing one particular token, more than one token or all of the tokens associated with the stable alias.

The method may further comprise receiving preferences in relation to a user account. The preferences may comprise preferences in relation to the client. The client may be a first client, such as a content supplier (such as an advertiser). The preferences may further comprise preferences in relation to a second client, such as a web server. If the preferences in relation to the first client indicate that the first client is not permitted to link tokens with data, the method may further comprise: not sending the second token to the first client; or instructing the first client to cease associating data with the user account. If the preferences in relation to the second client indicate that the second client is not permitted to provide relevant content to the user account, the method may further comprise not providing the third token to the second client.

The preferences in relation to the user account and/or the request to refresh one or more tokens associated with the user account may be received via a user interface provided by the server, such that a user of the user account is able to securely provide the preferences in relation to the user account and/or the request to refresh one or more tokens associated with the user account.

The method may further comprise receiving (e.g. via the user interface) a request to refresh the stable alias associated with a user account. The method may further comprise refreshing (or "rotating") the stable alias. Refreshing the stable alias may comprise sending an instruction to a service provider to refresh the stable alias and receiving a new stable alias for the user account.

Where a stable alias is a hashed or encrypted internal account identifier, refreshing the stable alias may comprise changing one or more of a secret, key and/or salt used in the hashing or encryption algorithm.

As described above, the stable alias may be retained on the server but not supplied to the client. This is to prevent long-term tracking of the user account by the client, which could be undesirable. The proposed method provides a way for the user to prevent one or more clients from being able to link tokens associated with the user account to data stored about the user account. In other words, the user is able to revoke consent for one or more clients, without refreshing the stable alias (which would unlink all tokens from their user account for all clients and negatively impact desirable functionality). The proposed solution addresses the third-party cookie problem described earlier and allows the user to easily pause or stop tracking by particular websites, clients, brands or all parties.

The present invention also provides a method of supplying content to a publisher website. The method may be performed by a server, such as a Demand Side Platform (DSP).

A method of supplying content to a web server is provided. The web server hosts a website. The content is relevant to a user account requesting the website from the web server. The method comprises determining content that is relevant to a user account, based on data associated with a second token generated by a server configured to perform a method as described above (and/or a first token generated by a server configured to perform a method as described above). The method further comprises receiving a third token associated with a user account requesting the webpage from the web server. The third token is formed by the server configured to perform a method described above by encrypting the second token using a first key of a pair of encryption keys. The method further comprises decrypting the third token using a second key of the pair of encryption keys to provide the second token. The method further comprises linking the third token with the data associated with the user account. The method further comprises sending the content that is relevant to the user account to the web server.

The methods described above refers to "data associated with a second token generated by a server configured to perform a method as described above". The term "second token" is used here for consistency with the "second token" described in relation to earlier methods discussed above. As will be appreciated by the skilled person, the terms "first", "second" and "third" are labels used to differentiate between the tokens. The order of the labels could be changed so that the term "second token" is replaced with the term "first token", the term "third token" is replaced with the term "second token" and the term "first token" is replaced with the term "third token", for example.

The method may further comprise receiving the second key from the server. Alternatively, the method may further comprise sending the first key to the server.

The third token may be decrypted to provide the second token and linked to the data, without needing to make a call to the server.

Preferably, the data is segment data supplied to or collected by the client. For example, a DMP of the client may store segment data and send the segment data to the ID service and/or the DSP of the client. The first token may be a marketing token associated with the data. The data and/or the first token may be received by the client from the server described above (the server may also be called an ID service, Telco Marketing ID platform or "TMI" platform), the web server, a server associated with the web server (such as a Supply Side Platform), a third-party (such as a data service or another web host), or may have been collected first-hand by the DSP server (e.g. from user interactions with content from the DSP server in the past).

The third token may be received from the web server or may be received from a separate server associated with the web server, such as a Supply Side Platform (SSP).

Linking the third token with the data may comprise determining that the user account associated with the third token is the same user account as the user account associated with the second token.

The method may further comprise receiving data comprising the second token from the server.

The first token may be a marketing token. The second token may be a random token. Alternatively, the first token and/or the second token could be a profile token, tracking token, or the like.

The third token may be an advertising token. Alternatively, the second token may be a accessing token, activating token, a consent token, a privacy token, or the like.

The web server may present the content to the user as secondary content, alongside primary content that the user is engaging with the website to access.

The present invention also provides a method of providing content to a user account. The method may be performed by a Supply Side Platform (SSP).

The second token may be an encrypted version of the first token. In some cases, the server may receive the second token, decrypt the second token using a key to retrieve the first token and send the first token to the client (content supplier).

The content supplier may decrypt the second token using a key to retrieve the first token. The content supplier may then link the second token with the data associated with the first token. Decrypting the second token to provide the first token may be performed instead of sending the second token to the server and receiving the first token back.

The method may further comprise receiving data associated with a third token. The method may further comprise sending the third token to a server configured to perform a method described above. The method may further comprise receiving the first token. The method may further comprise storing the data in association with the first token.

As described above, the client may receive data associated with a third token (in this case, the third token may be a marketing token). So that the data may be used more easily, the client may send the marketing token to the server and receive a different (first) token (such as a stable random token). The client may then store the data in association with the first token, so that the data can be more easily linked at a later stage (to an advertising token, for example). Advantageously, the client (e.g. DSP) is able to send first tokens to the server and receive second tokens back (e.g. to translate marketing tokens to stable random tokens). As a result, a bulk upload of stable random tokens and segment data being sent to the DSP may be avoided. Such a bulk upload may be undesirable because it could compromise user privacy and security.

The data may be received from a Data Management Platform, which may be associated with a website, brand or publisher, for example.

Alternatively, the content supplier may receive the data from the server. In this case, the server may receive the data from a Data Management Platform, substitute the third token associated with the data (such as a marketing token) for the first token (such as a random token), and send the data to the content supplier (such as the DSP) in association with the first token.

A method of a web server providing relevant content to a user account is also provided. The method comprises receiving, from a user account, a request for a website hosted by the web server. The method further comprises receiving, from a server configured to perform a method as described above, a token generated in association with the user account. The method further comprises sending the token to a content server, so that the content server can link the token with data and determine content that is relevant to the user account, based on the data. The method further comprises receiving the relevant content from the content server. The method further comprises sending the relevant content to the user account.

In prior art systems, one token may be generated for the webpage. That token may be passed to all relevant content providers that provide content to the user via the webpage. There may be multiple elements of relevant content on the webpage (displayed to the user in different portions of the website) and the same token may be used for each element.

Using the same token multiple times can also create security issues. Each time the token is used and sent to a content supplier, data relating to the user account may be provided via the public internet and may be accessed by unauthorised third-parties. These unauthorised third-parties may not be able to determine much information from a single communication, as the token does not reveal the users' identity. However, if the same token is used multiple times, there may be different data associated with the token each time. An unauthorised third-party accessing this data may be able to link all the data together and determine certain characteristics of the user via "fingerprinting" techniques.

To reduce this risk, the present invention provides a way in which a different token may be used for each element of relevant content, whilst retaining the functionality by which the authorised content suppliers can A) supply content that is relevant to the user account, based on data that they are able to link to the token using the methods described above; and B) provide a consistent user experience across the website, despite the fact that different tokens are used for each element of relevant content. By providing a method by which the content supplier can link anonymous tokens to data associated with a user account, the present invention improves the aggregation of data for authorised content suppliers and limits data aggregation that may be performed by unauthorised third-parties. The content suppliers may use the aggregated data to improve the relevance of content displayed to the user, without adversely impacting user security.

One example of how using different tokens for each element of relevant content might otherwise adversely affect consistency is that the content supplier may not be aware that the different tokens relate to the same user account. They may therefore supply the same content for each portion of the website and the user may see content duplicated. By linking the tokens together using the methods described above, the content supplier may determine that elements of content have already been displayed to the user account associated with the token and may supply alternative content.

A website may provide tokens to a plurality of DSPs so that multiple different content suppliers have an opportunity to provide relevant content (each can "bid" for the ad space).

In one example, each DSP may receive the same token (e.g. advertising token) in respect of an offer to supply content for an element of space. Each DSP may be in possession of the same key needed to decrypt the advertising token.

In another example, each DSP may receive a different token for the same element of space on the webpage. Advantageously, data stored by individual DSPs is therefore harder to link together for unauthorised users. Each DSP may be in possession of a different decryption key to decrypt the token (e.g. convert the advertising token to a stable random token).

A method of a web server providing relevant content to a user account is provided. The method comprises receiving, from a user account, a request for a website hosted by the web server, wherein the website comprises one or more portions in which relevant content may be provided to the user account. The method further comprises receiving, from a server configured to perform a method as described above, one or more tokens generated in association with the user account, each token corresponding to a respective portion of the website. The method further comprises sending the one or more tokens to one or more content servers, so that each content server can link the token with data and determine content that is relevant to the user account, based on the data. The method further comprises receiving the relevant content from the one or more content servers. The method further comprises sending the relevant content to the user account.

The web server may be a system comprising a web server and a Supply Side Platform (SSP). The website may further comprise one or more portions for primary content, which may be provided by the web server. For example, the web server may be a publisher site that displays primary content (provided by the publisher site) and one or more items of secondary content (provided by one or more third-party content suppliers, the "content servers"). The user may request the website in order to access the primary content. The relevant content may be secondary content, which the user may interact with following interaction with the primary content.

By providing a different token for each of the portions of the website in which relevant content may be displayed, it may be difficult for parties monitoring activity on the website to link activity in relation to the separate portions to the same user. This can improve security for users accessing the website.

The one or more tokens generated in association with the user account may comprise one or more advertising tokens.

The content servers may be one or more DSPs.

The method may further comprise determining a public address associated with the user account. The method may further comprise sending the public address to the server. The one or more tokens generated in association with the user account may be received in response to sending the public address to the server.

The public address may be the IP address and/or source port of the user account. The public address may be an encrypted IP address.

A method of a server providing data to a client is also provided. The method comprises receiving, from a first client, data comprising one or more tokens, wherein each of the one or more tokens is associated with a user account. The method further comprises, for each of the one or more tokens, determining a stable alias associated with the respective token, wherein the stable alias is associated with the respective user account. The method further comprises, for each of the one or more tokens, determining a different token associated with the respective stable alias. The method further comprises, for each of the one or more tokens, substituting the token with the different token. The method further comprises sending, to a second client, the data comprising the one or more different tokens.

The server may receive data in association with a first token and pass the data on to another client in association with a second token (where the first and second tokens are linked to the same stable alias/stable identifier/user account).

The data may comprise data relating to a plurality of user accounts. The data may comprise a plurality of tokens of a first type associated with a plurality of user accounts. The server may, for each of the tokens of the first type, determine a stable alias associated with the token of the first type, determine a token of a second type associated with the stable alias, substitute the tokens of the first type for the respective tokens of the second type and send the data comprising the tokens of the second type to a second client (and/or back to the first client).

For example, a DMP may send segment data to the server, the segment data comprising segmentlDs and a list of marketing tokens associated with each segmentlD. The server may translate each of the marketing tokens into a stable random token and pass the data (segment data comprising segmentlDs and a list of stable random tokens associated with each segmentlD) on to a content supplier.

A method of a server propagating preferences associated with a user account to one or more clients is also provided. The method comprises receiving the preferences associated with the user account (e.g. from the user of the user account). The method further comprises determining a token associated with the user account (optionally the token is linked to a stable alias associated with the user account). The method further comprises sending the token in association with the preferences to the one or more clients.

The token may be an anonymous token. In other words, the token does not reveal any information that would enable a client to determine data that identifies the user account (such as an internal account identifier). Advantageously, by linking user preferences with an anonymous token, rather than with a user ID, user preferences may be enforced without the server and/or client needing to determine a user identity (e.g. by resolving a user address or linking the user token to other tokens associated with the user). As a result, the user preferences may be enacted more efficiently.

Moreover, because the preferences are linked to an anonymous user token (which cannot be used to identify the user), rather than to a user ID, or address that may be used to identify the user, the security and privacy of the user may be improved.

Determining a token associated with the user account may comprise determining a stable alias associated with the user account and determining a token associated with the stable alias. Sending the token in association with the preferences to the one or more clients may enable the one or more clients to link the token to the preferences, without knowledge of the stable alias (which may not be sent to the client).

The client may be a first client. Determining a token associated with the user account may comprise generating the token (and optionally storing the token in association with the stable alias). The method may further comprise providing the token to a second client.

The preferences and token may be sent to a first client, such as an advertiser and the token may be further sent to a second client, such as a publisher. If the publisher offers the advertiser an opportunity to supply content and provides the token to the advertiser, the advertiser may identify the preferences stored in association with the token and act accordingly, based on those preferences. This may be performed without the advertiser needing to know anything about the user account, other than the token and the preferences. The advertiser may not need to perform network identification based on an address of the user account. The advertiser may not need to decrypt the token to provide another token. The advertiser may do not need to send the token to the ID service and receive other linked tokens in response.

If the preferences indicate that network identification may be undertaken (i.e. is permitted), the method may further comprise receiving a public address or network token associated with the user account, and determining a stable alias associated with the user account, based on the public address or network token.

Where user preferences "indicate that network identification may be undertaken", this may indicate that the user has provided consent for their public address or a network token associated with the user account to be used to determine further information about the user account. In particular, the public address or network token may be used to determine a stable alias associated with the user account.

If the preferences indicate that network identification may be undertaken (i.e. is permitted)), the method may further comprise receiving a public address associated with the user account, determining a service provider of the user account by comparing the public address of the user account with a lookup table of public addresses and/or ranges of public addresses (each public address or range of public addresses may be stored in association with a corresponding service provider selected from a plurality of service providers), sending the public address to the corresponding service provider of the user account, and receiving a stable alias from the service provider.

If the preferences indicate that network identification may not be undertaken (i.e. is not permitted), the method may further comprise not determining a stable alias associated with the user account based on a public address or network token received associated with the user account. In other words, the method may comprise determining that a stable alias associated with the user account should not be determined.

A method of processing an offer to supply content to a web server is also provided. The web server hosts a website. A user account is requesting the website from the web server. The method comprises receiving (optionally from a server configured to perform a method as described above) a token associated with the user account and preferences associated with the user account. The method further comprises storing the preferences in association with the token.

The method may further comprise receiving, from the web server, an offer to supply content to the web server. The offer to supply content may comprise the stored token. Alternatively, the offer to supply content may comprise another token associated with the user account and the method may further comprises decrypting the another token to provide the stored token.

If the stored preferences associated with the stored token indicate that tokens associated with the user account should be linked to other tokens associated with the user account and data stored in association with the other tokens (in other words, if the user has consented to receiving relevant content from the content supplier, which may be a brand), the method may further comprise linking the token with the data, determining content that is relevant to the user account based on the data, and sending the content that is relevant to the user account to the web server.

If the stored preferences associated with the stored token indicate that tokens associated with the user account should not be linked to other tokens associated with the user account and/or data associated with the user account (in other words, if the user has NOT consented to receiving relevant content from the content supplier), the method may further comprise not linking the token with other tokens and/or data associated with the user account, and not sending content that is relevant to the user account to the web server.

If the stored preferences associated with the stored token indicate that data associated with the user account should not be stored, the method may further comprise deleting data and/or tokens associated with the user account.

Advantageously, the content supplier is able to determine that the offer from the web server relates to a user account that has not consented to (or has explicitly revoked consent to) provide relevant content (such as targeted advertising). The content supplier is able to determine this based just on the token associated with the user account and has no need to resolve

User consent may be managed by storing user preferences in association with tokens on the server side. As a result, user tokens may not need to be stored as cookies on the user's device. Storing cookies in this way can create privacy and security problems, as described above. Therefore, a more secure system may be achieved by storing user preferences in association with tokens.

Moreover, by linking user data to tokens in the manner described above and then linking user preferences (e.g. consent preferences) to the same tokens, the user preferences may be enforced at the point at which the tokens are received, without needing to use the tokens to determine further user data or other tokens or identifiers associated with the user account. As a result, less data associated with the user account is exchanged across the network. User data may be vulnerable to attack when exchanged across the network (or when mechanisms for determining user data are exposed). Therefore, by mandating that user preferences are stored by the client in association with the token, user security is improved.

These methods of providing data to a client may be performed by a server as described above, in addition to the methods of enabling a client to link data with a token associated with a user account.

A server is also provided. The server is configured to perform a method as described above.

Computer software is also provided. The computer software comprises instructions that, when executed on a processor of a computer, cause the computer to perform a method as described above.

### Brief Description of the Drawings

The present invention will now be described with reference to a number of nonlimiting specific examples illustrated in the accompanying drawings, which are briefly described below.
Figures 1A and 1B illustrate an overview of first and second specific examples.
Figures 2A and 2B illustrate an example user interface for a privacy portal.
Figure 3 illustrates an overview of an example use case.
Figure 4 illustrates a two-step example use case.
Figure 5 illustrates the first step of the two-step example use case illustrated in Figure 4.
Figure 6 illustrates the second step of the two-step example use case illustrated in Figure 4.
Figure 7A illustrates a sequence diagram showing how the proposed system operates when the user provides consent and interacts with an advertiser site. Figure 7B illustrates a programmatic sequence diagram showing how the proposed system provides operates when the user provides consent and interacts with a publisher site. Figure 7C illustrates a sequence diagram showing how a user may revoke consent from an advertiser. Figure 7D illustrates a sequence diagram showing how the proposed system links user consent for an advertiser and publisher together.

### Detailed Description

The invention will be described in relation to specific examples involving tokens that may be used for marketing purposes. However, the skilled person will appreciate that these are only specific examples and that the invention is applicable to other systems in which data relating to an anonymous user account is linked to other data relating to the same anonymous user account and accessed by parties across a network. For example:
- preserving user preferences of anonymous users accessing a service (e.g. presenting text in a preferred language;
- presenting data to anonymous users in an appropriate form (e.g. presenting values in a local currency);
- collecting statistical data from anonymous users for analysis and optimisation;
- authorised surveillance of criminal activity;
- and the like

Network operators have the ability to identify users via their data connection. Identification is referred to as the ability to identify a visitor as the same visitor transparently (with limited or no interaction from a user). Identification does not in this context include authentication or authorisation nor enables a network operator to monetise browsing history or personal data they might hold for a specific subscriber.

A consortium of network operators can offer an alternative digital identification service that can provide improved reach and accuracy compared with existing solutions that rely on monopoly/oligopoly/market share/ubiquity. Such a solution beyond user privacy can level the playing field for smaller ecosystem players and continue to support the current free internet business model that publishers enjoy.

As mentioned previously, this solution uses the user's network identity to create an anonymous identifier to be used for linking data relating to the user, subject to the user providing consent. The data may be used to supply relevant content (such as advertising) to the user

The creation of the anonymous identifier (the stable alias) could be managed by the service provider (network provider). The server may generate a random UUID and provide this to the ID service as the stable alias, instead of providing a hashed internal account identifier. In this way, the generation of the stable alias is hidden from the ID service and is instead managed by the service provider (network provider) Advantageously, by not allowing the hashed internal account identifier to leave the service provider network, security and privacy of the user account may be improved, because the hashed internal account identifier (which may be more difficult to refresh and could therefore be problematic in the wrong hands, as discussed above) does not leave the service provider network.

Using the network to identify a customer is a capability available to operators and in some cases may be exposed as a service to third parties. Similarly, the use of a stable identifier is also common in the world of Digital Marketing (example adobe declared ID). A stable anonymised identifier may be linked to a stable internal identifier (e.g. hashed internal account identifier) as a declared ID. In contrast to prior systems and methods, examples of the proposed systems and methods use a number of abstract tokens linked to a random stable identifier. In doing so, examples of the proposed systems and methods enable different digital marketing use cases based on the core network capability of identifying a user, without sharing either the hashed internal account identifier or the random stable identifier linked to it.

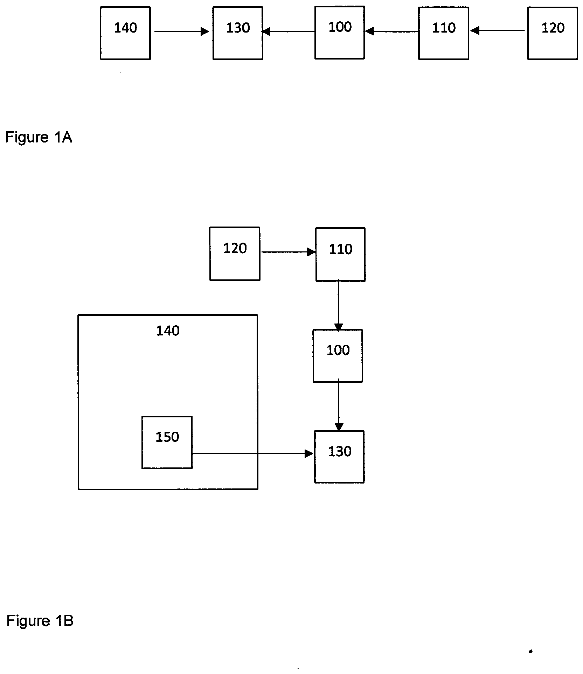

Figure 1A illustrates an overview of a first specific example. A server 100 receives data and associated tokens from a client server 110, such as a DMP (or a similar server, such as a Customer Data Platform, CDP). The data may be in the form of one or more segment IDs and a list of one or more tokens (e.g. marketing tokens) corresponding to each segment ID. Alternatively, the data may be in the form of one or more tokens (e.g. marketing token) and a list of one or more segment IDs corresponding to each token. The data stored in the DMP may have been collected via a website 120, which uses a marketing token (for example, as a declared ID for Adobe AM). In order for data to be collected in this way, the following steps may be required:
1. Obtain consent from the user
2. Undertake Network Identification
3. Assign a marketing token

The marketing token may be used for personalisation, analytics, audience management, and the like. The marketing token is data controller specific and has a time to live (TTL). Once the TTL expires, a new marketing token is returned. The availability of marketing tokens can also be controlled via the privacy portal.

The server 100 passes the data to another client server 130, such as a DSP. The DSP receives a token from a publisher website 140 (for example via header bidding). The token that the publisher website passes to the DSP is a different token (e.g. an advertising token). To provide an advertising token to the DSP, the following steps may be required:
1. Obtain consent from the user
2. Undertake Network Identification
3. Assign an advertising token

The advertising token may be used for re-targeting, frequency capping, exclusions for specified content, and the like. The advertising token is session specific. Availability of advertising tokens can also be controlled via the privacy portal.

Figure 1B illustrates a second specific example, in which data activation retargeting is performed. A user interacts with a website 120 and is provided with a marketing token "ABCD456" and an advertising token "XYZ239". Marketing token "ABCD456" is used as a declared ID in the DMP. The marketing token may be provided to the user in response to a user granting consent. The marketing token "ABCD456" is sent to a DMP 110 associated with the website 120 and the DMP 120 stores data. The data may comprise segment IDs and lists of marketing tokens of users in each segment. The data is passed on to an ID service 100, which may also be called a Telco Marketing ID (TMI) platform.

The ID service 100 receives data from the DMP 110 and performs a token conversion. The ID service 100 exchanges the marketing tokens for other corresponding tokens (which in this specific example are corresponding stable random tokens, such as UUIDs). The ID service then sends data to a DSP 130. The data may comprise segment IDs and lists of stable random tokens of users in each segment.

The user also interacts with a publisher website 140 and is provided with a marketing token "YHJ843" and an advertising token "MBE679". The advertising token "MBE679" is available only if a valid cookie consent is available. The publisher website comprises primary content and ad space 150. The ad space is available for third-party content suppliers to display secondary content to the user. The advertising token "MBE679" is provided to the DSP 130 via header bidding, to provide the DSP with an opportunity to supply content. A user visiting a different page will result in a different advertising token being sent via header bidding.

The DSP 130 receives the advertising token "MBE679" and decrypts it to provide the corresponding random token. Data activation is possible via the random token. In other words, the DSP may use the data received from the ID service (which contains the stable random token) to decide to supply content that is relevant to the user (who is identified via the advertising token and corresponding random token).

An example method is provided below.
1. Consent is given by the user on a brand or publisher domain.
2. The user is identified over the network.
3. An operator-stable pseudonymous identifier is available to the ID service (this identifier never leaves the ID service platform).
   Example stable pseudonymous identifier = d492b576f4c78f496a65f8d983b5c27c566b8cdc4f384b31e7c129e943ad8285
4. A random unique identifier (the stable random token, which may be a UUID) is created and linked to the hashed operator stable pseudonymous Identifier.
   Example UUID= e4dd2ad8-e554-41e4-8d10-02bf690a5bf0
5. The marketing token and advertising token can be generated from the random token
   Example marketing token = 76043d0530e7b42792c6e0822f71fb837ebd542d2d40dcbfac7bc8c4167d380b
   Example advertising token = +4cCpZ2FyThU/LUFOD+4Y/TaCphtx8rATNwrW82V2UZp+He5p2Pj9iTPm/ZhiFhqZ ekCjmOj0rUOIIYCqdajMg==
6. The marketing token and advertising token are available on the client.
7. The marketing token is used as a "declared id" in an audience management platform (such as a DMP).
8. The DMP pushes the marketing token and segmentlDs to the ID service.
9. The ID service translates the marketing token to random tokens and shares the data with the DSP.
10. A publisher can use marketing token as a stable ID for internal use cases (such as personalization, analytics, and the like).
11. A publisher uses one or more advertising tokens to enable participating brands to bid for advertising space in their website estate.
12. The advertising token is passed via header bidding (or other process) to a supply side platform (SSP) associated with the website.
13. Then, the advertising token is passed via header bidding from the SSP to one or more DSPs.
14. The DSP decrypts the advertising token and matches the random token against the data (in token, SegmentID format) to decide whether or not to participate in bidding for the adspace.
   Example: DSP decrypts "+4cCpZ2FyThU/LUFOD+4Y/TaCphtx8rATNwrW82V2UZp+He5p2Pj9iTPm/ZhiFhq ZekCjmOJ0rUOIIYCqdajMg==" to "e4dd2ad8-e554-41e4-8d10-02bf690a5bf0"

In a bit more detail, after consent has been provided, and the user is identified by the network, the first anonymous identifier created is the random token, which may be a UUID. Two other anonymous identifiers are derived from the random token: the marketing token and the advertising token. The marketing token is created via hashing a time bound, website domain specific string linked to the random token, using the SHA256 algorithm.

The advertising token is created by dynamically encrypting the random token, using an AES symmetrical block cipher algorithm.

The marketing token is used to qualify users to specific audience segments, e.g. a user browsing a website selling used cars, looking at pages showing different types of electric family vehicles, would qualify for a segment 'Electric Family Vehicles'. By associating the user's marketing token to this segment, the ID service enables a personalised experience for the user the next time they visit the same website, potentially showing an offer for this segment.

The advertising token is shared with the wider advertising ecosystem enabling a brand to target users, previously qualified for an audience segment, to be displayed relevant content (such as an advert) on a third-party publisher's website, e.g. following on from the example in the previous paragraph, the user could be shown an offer associated with the 'Electric Family Vehicles' segment on the publisher's site.

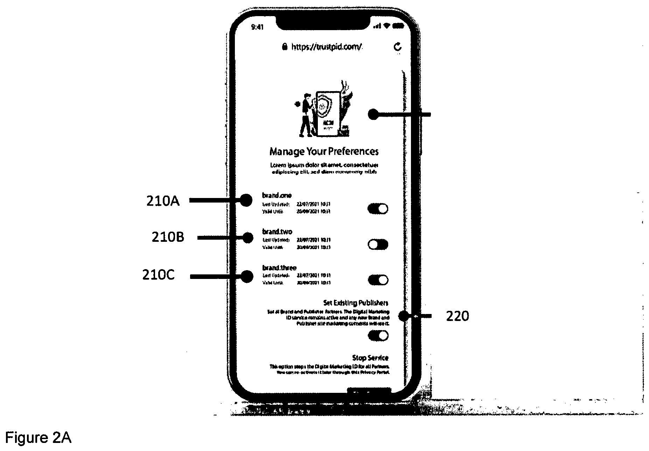

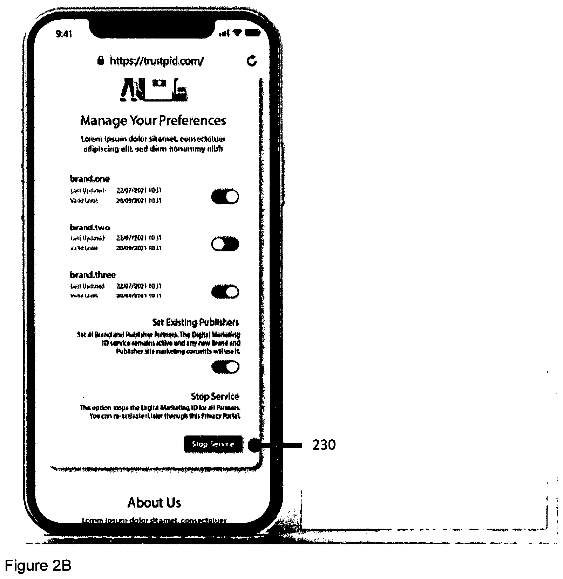

Figures 2A and 2B illustrate an example user interface for a privacy portal. Figure 2A illustrates a user interface for managing user preferences. Interface elements 210A to 210C allow users to set preferences in relation to individual clients/brands. The user interface provides the user with means to disable or enable access to personal ID by individual clients/brands. Element 220 provides a user interface element for managing all partner preferences. This provides the user with means to disable or enable all partner's access to personal ID.

Figure 2B illustrates further elements in the same user interface. Element 230 provides a user interface element for stopping the personal ID service altogether.

The ID service may use an ID Graph to associate the random token (and other tokens) with the stable alias, such as the hashed internal account identifier, and the user's consent settings for the website's domain.

The idea is applicable to all network operators. Network operators are uniquely positioned to offer an alternative solution that can provide unprecedented reach and accuracy in terms of identification, even when compared with dominant market suppliers.

Alternative solutions involve user cookie identifier matching across domains (third-party cookies). Third-party cookies may be unreliable and it can be difficult to ensure consent has been given for their use. Moreover, support for third-party cookies is currently being reduced within browsers. In contrast, the proposed solution provides a combination of network operator integration, accuracy and reach of user identification and unique features of identity abstraction.

The exact process by which anonymised identity tokens are created to allow targeted provision of content depends on the use case. However, the starting point in each case is consumer consent. A simplified high-level summary of the overall process can be provided as follows:
1. When a user visits a website, the brand or publisher in question will request consent (for the use of the ID service for a specific use case).
2. Once the user has provided consent, a call is made to the ID service to determine which operator's network the user resides on.
3. The relevant network operator then passes on a hashed or encrypted internal account identifier to the ID service. The ID service in turn creates a random token that is linked to the hashed or encrypted internal identity. The ID service has no means of re-identifying the internal identity as only telecommunications service providers (or "Telcos") have knowledge of the respective secrets required to produce the hashed or encrypted internal account identifier shared.
4. Depending on the use case, the ID service then uses these to create an anonymised identity token for the user - for example, a marketing token for own media use cases (e.g. site optimisation) and an advertising token for paid media use cases (e.g. re-targeting). These use cases will be discussed in more detail below.

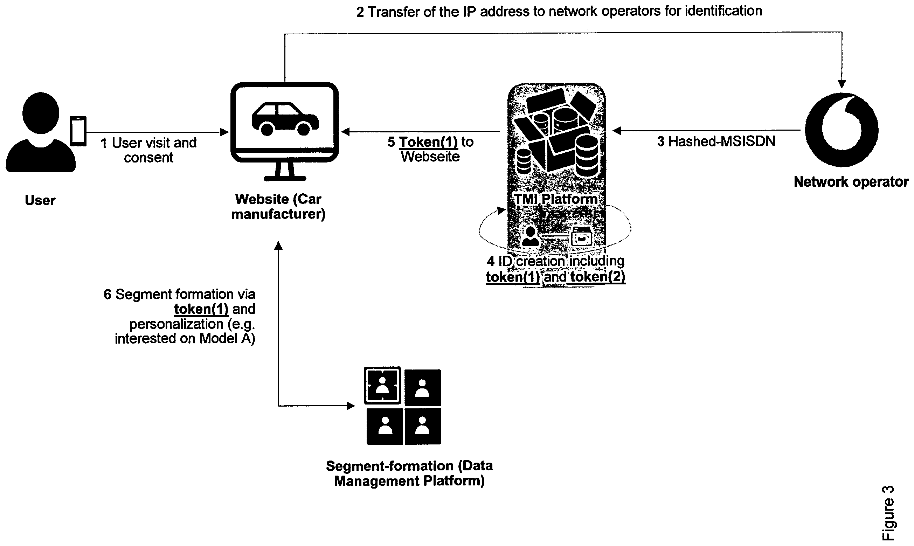

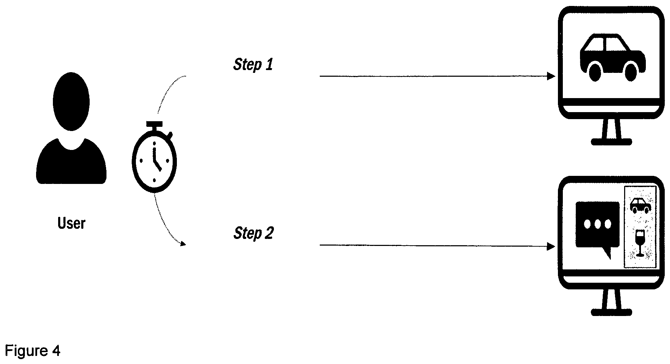

By way of illustration, two use cases are described in more detail below, in relation to Figure 3 and Figure 4.

In a first use case, data collected by a brand may be used by the brand itself (using a token such as a marketing token). This use case relates to the situation where a brand (for example, a car manufacturer) wants to tailor its website to a user's interests if that user revisits the same website. An example is provided in Figure 3, using a simplified diagram that shows the technical process:
1. A user visits a car website. The car manufacturer would like to tailor its website to that user's interests if the user visits its website again, and so requests consent from the user to use the ID service for this purpose.
2. If the user grants consent, network identification is undertaken. This involves making a call to the ID service to establish on which operator's network the user resides.
3. The relevant network operator then passes on a stable alias (such as a hashed internal telco identifier, like a hashed internal account identifier) to the ID service.
4. The platform creates random token for that user, illustrated as token(2), and links token(2) to the hashed internal account identifier.
5. The ID service uses the hashed internal account identifier and token(2) to create an anonymised ID for the user, illustrated as token(1) (which may be a marketing token). Token(1) may be domain-specific (i.e. specific to a particular website) and may have a specified time to live. In some examples, this time to live will be 90 days, although this property is configurable to any value.
6. Token(1) is passed on to the client (which may be a brand such as a car manufacturer).
7. The client's (e.g. car manufacturer's) data management platform (DMP) then places token(1) for this user in a segment together with other users with similar interests (e.g. if the user has looked at the "Model A" car, their token(1) / marketing token may be placed in the same segment as the token(1) / marketing token of other users who have looked at the "Model A" car).

There are a number of different ways in which steps 2 and 3 may be undertaken. The ID service may determine the on which operator's network the user resides based on a public address (such as an IP address) of the user. The ID service may send the public address to the network operator and receive the hashed internal account identifier.

Alternatively, the ID service may determine the on which operator's network the user resides based on a public address. The ID service may then request a network token (which may be an encrypted IP address). The user device may request the token from their network operator and supply the token to the ID service. The ID service may then send the token to the network operator and receive the hashed internal account identifier of the user account.

During the next time-to-live period, which may be 90 days (provided the user has not revoked their consent), if the user visits the car manufacturer's website again, the car manufacturer is able to use the segment information to provide the user with a personalised experience. For example, it may show the user an offer for the "Model A" car they have previously looked at.

The user remains anonymous throughout this process; while the car manufacturer is able to place the user in a segment according to their interests, it is not able to decrypt token(1) and does not have access to any of the user's identifiable information (e.g. name, telephone number, address etc.).

In another use case, token(1) (e.g. the marketing token) and another token, illustrated as token(3) (which may be an advertising token), may be used to provide relevant content to a user. This relates to the situation where a brand wants to show personalised content to relevant users on a third-party publisher's website. In this case, the process consists of two steps, each requiring separate user consent. For example, if a car manufacturer (brand) wants to show a consumer an ad on a news website (publisher), the process can be summarised as illustrated in Figure 4. Step 1 represents User consent for creation and use of token(1) (e.g. marketing token). Step 2 represents user consent for creation and use of token(3) (e.g. advertising token).

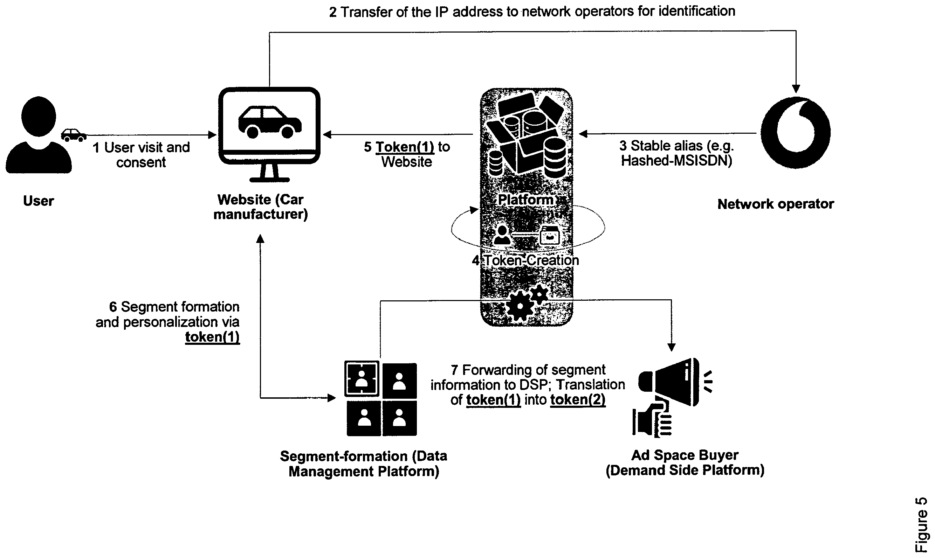

Step 1: Creation of token(1) (which may be a marketing token in some examples) and segment information, which is then passed on to a demand-side platform (DSP) to purchase advertising space on behalf of a brand (such as a car manufacturer). This is illustrated in Figure 5.
1. Token(1) is created when the user visits the car manufacturer's website and provides consent (in accordance with the process described above for the own media use case).
2. The car manufacturer's data management platform (DMP) then places token(1) for this user in a segment together with other users with similar interests - for example, users who have looked at the "Model A" car.
3. This segment information is then provided to a demand-side platform (DSP). The information provided does not contain information on any particular user, only on segments consisting of groups of users with similar interests (sometimes there may be thousands of users in each group).
4. Token(1) is turned back into token(2) by the ID service, which is passed on to the DSP. The ID service may achieve this by looking up token(1) in a datastore and determining a stable alias stored in association with token(1). The ID service may then determine token(2) that is stored in association with the stable alias.

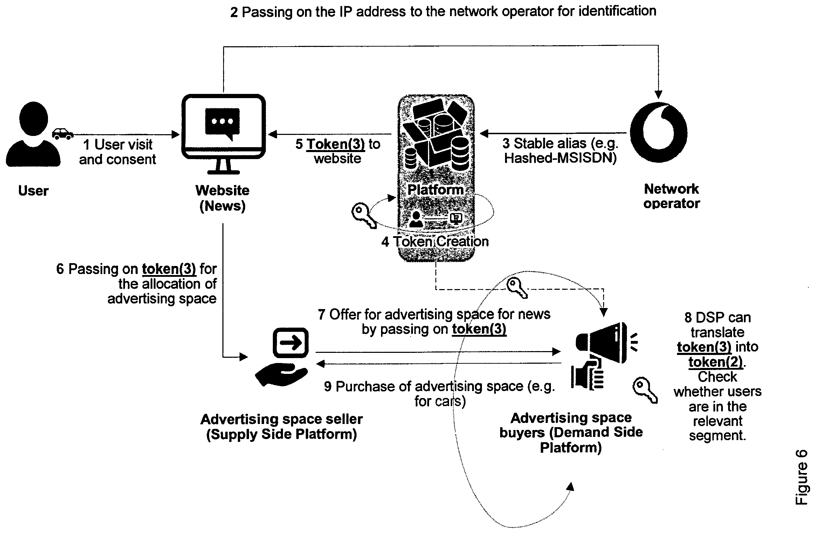

Step 2: The user is re-identified on the news website and relevant content (such as a car advertisement) is displayed. This is illustrated in Figure 6.
1. The user visits the publisher's news website and provides consent for the creation and use of an anonymised token, token(3) (which may be an advertising token in some examples), to show the user personalised content.
2. Network identification is undertaken by making a call to the ID service to establish on which operator's network the consumer resides.
3. The network operator passes on a hashed internal account identifier for the user to the ID service .
4. The ID service links this hashed internal account identifier to a randomly generated token, illustrated as token(2). Then, the ID service turns token(2) into an anonymised token (such as an advertising token) for the user. This token, which is illustrated as token(3), is session-specific, which means a new token(3) is generated each time a user (re-)visits a website (provided the user grants consent each time).
5. The ID service then passes on token(3) to the publisher.
6. The publisher in turn passes on token(3) to a supply-side platform (SSP) to offer advertising space on the news website on its behalf.
7. The SSP passes on token(3) to a DSP to offer advertising space on the news website on the publisher's behalf.
8. The DSP (acting on behalf of its customer - the car manufacturer) can translate token(3) (which may be the advertising token) into token(2) to confirm whether the user looking at the publisher's website has been placed in any relevant segments.
9. In this example, the DSP would be able to see that the user is in a relevant segment, as the user has previously visited the car manufacturer's website and looked at the "Model A" car. The DSP could therefore purchase advertising space on the publisher's news website on behalf of the car manufacturer, which would then result in the user being shown an ad for the "Model A" car on the news website.

### User interface and consent management

Users can easily manage their consent at any time by going into the ID service privacy portal. In doing so, they are able to control and limit the data that is stored about them. This provides improved security for the user account as least because techniques like fingerprinting are harder for third parties to perform when the data linkable to a user is limited. This also improves user privacy as they are able to control on a case-by-case basis what data is stored about them. There are a few ways in which the user can manage their preferences.
1. Per brand or publisher: A user can choose to grant or revoke consent in relation to particular brands or publishers. For example, if a user has previously provided consent to Der Spiegel, they can use the portal to revoke consent in relation Der Spiegel only. The consent they have provided in relation to other brands or publishers will not be affected.
2. All consent: A user can also choose to revoke consent for all brands and publishers in relation to which they have previously provided consent. If all existing consents are revoked, it is no longer possible for existing tokens such as marketing tokens to be used, even if the time-to-live has not yet expired. This is not relevant for tokens that are session-specific (such as advertising tokens), which are therefore not reused in any event. However, it is still possible to create new tokens (such as marketing tokens and advertising tokens), provided the user provides consent when they next visit a brand's or publisher's website.
3. Blacklist: Finally, a user has the option of blacklisting the ID service altogether. The blacklist option ensures that no new tokens (e.g. marketing tokens or advertising tokens) are created, regardless of whether the user provides consent upon visiting a particular website.

Consent revocation may be performed via the user interface of the ID service. Consent is collected on behalf of the ID service by brands (who may also be advertisers) and publishers. The ID service "consent" management effectively deletes all ID graph data for the specific brand or publisher or for all brands, publishers which has the effect of consent removal. A CMP (consent management platform) may evaluate how to achieve consent synchronisation and CMPs may expose an API that would allow the ID service to delete the client side consent cookie, based consent held by brands and publishers so that any user changes are fully reflected also on CMP.

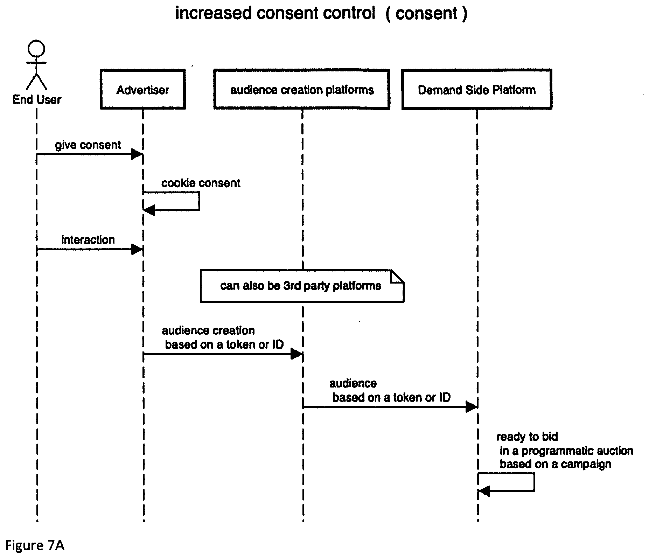

Figure 7A illustrates a sequence diagram showing how the proposed system operates when the user provides consent and interacts with an advertiser site.
1. The user grants consent to the advertiser.
2. The advertiser stores a record of the user consent.
3. The user interacts with the advertiser website.
4. An audience creation platform of the advertiser/brand (such as a DMP or third party platform) generates audience data (such as a segment ID associated with the user token), based on the user interaction.
5. The audience data is forwarded to a DSP associated with the advertiser. The audience data may be sent to the DSP via the ID service, so that the token (first token, which may be a marketing token) associated with the user account may be replaced with a different token (second token, which may be a random token).
6. The DSP determines relevant content to supply to the user account and is prepared to supply this content in case an opportunity to supply content to the same user account arises in the future (the same user account may be determined based on linking a third token, such as an advertising token, to the second token, as described in this application).

User consent is a prerequisite for undertaking network identification and creation of tokens. Therefore, the DSP may take the existence of tokens as a proof of consent. Likewise, the ID service may undertake network identification to determine a stable alias only if the user account has provide consent. Therefore, the ID service may take the existence of a stored stable alias for the user account as proof of consent.

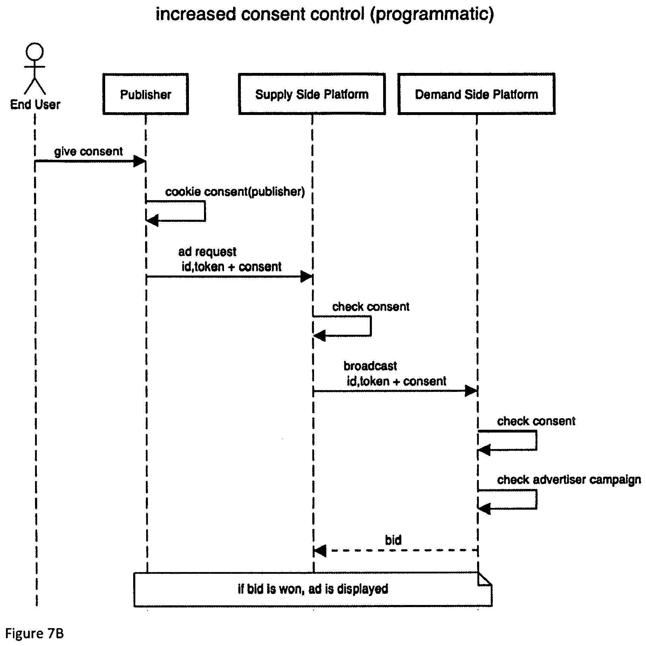

Figure 7B illustrates a programmatic sequence diagram showing how the proposed system operates when the user provides consent and interacts with a publisher site.
1. The user grants consent to the publisher.
2. The publisher stores a record of the user consent.
3. The publisher send an ad request to the SSP, wherein the ad request comprises a token (which may be a third token, such as an advertising token). The publisher may also send consent data to the SSP. Alternatively, the SSP may infer that consent has been provided from the existence of the token.
4. The SSP checks that the consent is valid (which may entail determining that a token is present).
5. The SSP broadcasts an opportunity to supply content to one or more DSPs. The opportunity comprises a token and a consent.
6. The DSP checks that the consent is valid.
7. The DSP checks whether there is relevant content to display to the user account, based on the data linked to the token.
8. The DSP supplies relevant content to the SSP.
9. If the bid is won by the DSP, the relevant content is displayed to the user.

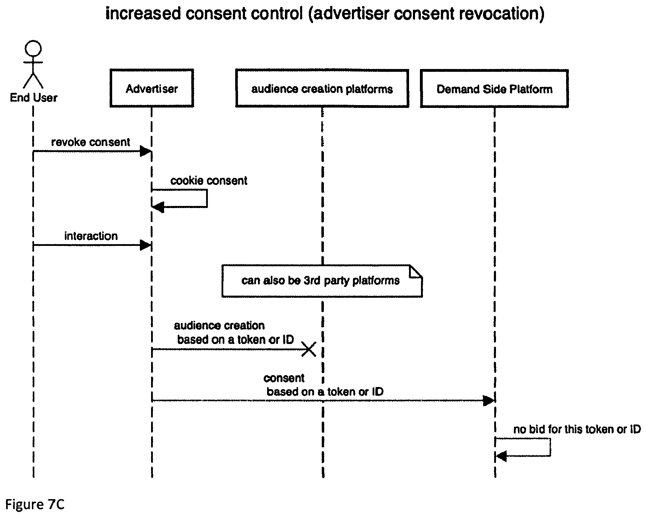

Figure 7C illustrates a sequence diagram showing how a user may revoke consent from an advertiser.
1. The user revokes consent from the advertiser.
2. The advertiser stores a record of the user consent revocation (or deletes a previous record of consent). This may be performed by adding a token associated with the user account to a list of excluded tokens. Alternatively, this may be performed by deleting stored tokens that are associated with the user account.
3. The user interacts with the advertiser website.
4. An audience creation platform of the brand (such as a DMP or third party platform) does not generate a segment ID based on the user interaction. If a token associated with the user account is stored by the audience creation platform (e.g. in association with a segment ID), the token may be deleted.
5. The advertiser sends the user preferences (consent data) in association with the token to a DSP associated with the advertiser. This may involve sending the token to the DSP with an instruction to place the token on an exclusion list. The instruction may be in the form of an HTTP call.
6. The DSP does not have any data stored in relation to the token and/or has stored a record that the user account associated with the token has denied consent for data to be used for supplying relevant content. Therefore, if a publisher offers an opportunity to supply content in association with the token (or another token associated with the same user account), the DSP will not bid to supply content.

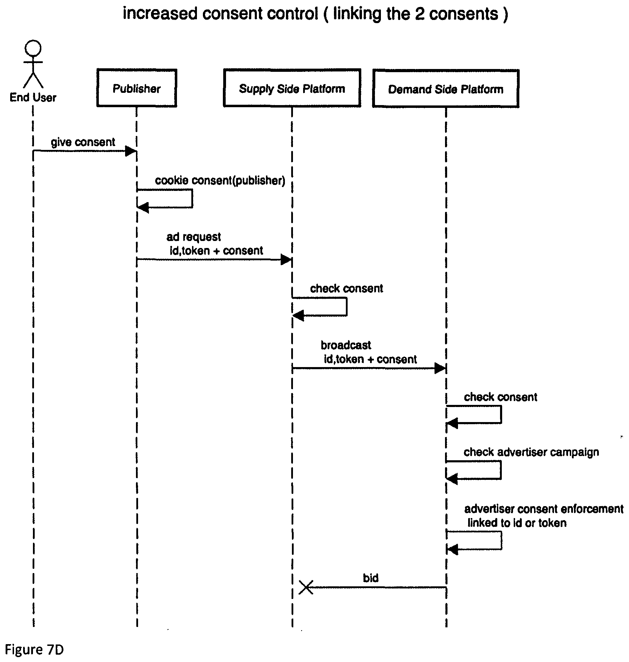

Figure 7D illustrates a sequence diagram showing how the proposed system links user consent for an advertiser and publisher together.
1. The user grants consent to the publisher.
2. The publisher stores a record of the user consent.
3. The publisher send an ad request to the SSP, wherein the ad request comprises a token and a consent.
4. The SSP checks that the consent is valid.
5. The SSP broadcasts an opportunity to supply content to one or more DSPs. The opportunity comprises a token and a consent.
6. The DSP checks that the consent is valid. In other words, the user has consented to the *publisher.* The DSP may determine that the user has provided consent to the publisher by virtue of the existence of the token (third token, which may be an advertising token) in the broadcast opportunity.
7. The DSP checks the advertiser campaign. In other words, the DSP determines content that is relevant to the user account associated with the token.
8. The DSP determines that the token is associated with preferences that prohibit the DSP from supplying targeted content. In other words, the DSP determines whether the user has provided consent to (or specifically revoked consent from) the *advertiser.*
9. Therefore, the DSP does not respond to the broadcast with a bid to supply content.

Even if the user has supplied consent to the publisher, if the user has not supplied consent to the advertiser, the dual-consent requirement is not fulfilled. The DSP may determine that that consent has not been provided to the advertiser by determining that the token is on a list of excluded tokens. Alternatively, the DSP may not be in possession of data linked to the token/user account because the user did not consent to data being collected (see Figure 7C). The DSP may decrypt the token from the broadcast opportunity, which may be an advertising token, to provide a random token. The DSP may determine that it holds no audience data in association with the random token and therefore determine that either the user has not provided consent or has not interacted with the brand website. Alternatively, the DSP may determine that the random token is on an exclusion list and therefore determine that the user account has revoked consent from the advertiser.

As described above, by linking user preference data to a token that is associated with the user account, user consent preferences may be enforced. Preferences may be enforced without needing to look up user data in order to link the preferences to the anonymous user token. This may improve user privacy and security. Moreover, by linking the user preferences to a user token, the present system may enable user preferences to persist, rather than requiring that the user grant/refuse consent on every visit to the website.

It will be appreciated that embodiments of the disclosure may be implemented using a variety of different information processing systems. In particular, although the Figures and the discussion thereof provide exemplary computing systems and methods, these are presented merely to provide a useful reference in discussing various aspects of the disclosure. Embodiments may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of systems and methods that may be used. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

It will be appreciated that, insofar as embodiments of the disclosure are implemented by a computer program, then a storage medium and a transmission medium carrying the computer program form aspects of the disclosure. The computer program may have one or more program instructions, or program code, that, when executed by a computer, causes an embodiment of the disclosure to be carried out. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and, where the context allows, vice versa. For instance, unless the context indicates otherwise, a singular reference herein including in the claims, such as "a" or "an" (such as a server, a gateway, a private routing table, a tunnel, a router, or an endpoint) means "one or more" (for instance, one or more servers, one or more gateways, one or more private routing tables, one or more tunnels, one or more routers or one or more endpoints). Throughout the description and claims of this disclosure, the words "comprise", "including", "having" and "contain" and variations of the words, for example "comprising" and "comprises" or similar, mean that the described feature includes the additional features that follow, and are not intended to (and do not) exclude the presence of other components.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

A method of manufacturing and/or operating any of the devices disclosed herein is also provided. The method may comprise steps of providing each of the features disclosed and/or configuring or using the respective feature for its stated function.

## Claims

1. A method of a server enabling a client to link data with a token associated with a user account, the method comprising:
receiving a first token associated with the user account;
determining a stable alias associated with the first token, wherein the stable alias is associated with the user account;
determining a second token associated with the stable alias; and
providing the second token to the client,
wherein one of the first token and the second token are associated with data, such that providing the second token to the client enables the client to link the other of the first token and the second token with the data, without knowledge of the stable alias.

2. The method of claim 1, wherein receiving the first token comprises receiving data relating to the user account, wherein the data comprises the first token, wherein the method further comprises manipulating the data by replacing the first token with the second token so that the manipulated data comprises the second token, wherein providing the second token to the client comprises providing the manipulated data comprising the second token to the client.

3. The method of claim 1 or claim 2, wherein the data comprises one or more of:
categorisation data; and
user activity data.

4. The method of any preceding claim, wherein the method further comprises:
generating one or more tokens associated with the user account, wherein the one or more tokens optionally comprise the first token and the second token, and optionally storing each of the one or more tokens in association with the stable alias; and
providing the one or more generated tokens to the client and/or one or more other clients, wherein providing the one or more generated tokens to the client optionally comprises providing the first token to the client.

5. The method of claim 4, wherein the client is a first client, wherein generating one or more tokens associated with the user account comprises generating a third token, wherein providing the one or more generated tokens to the client and/or one or more other clients comprises providing the third token to a second client.

6. The method of any of claim 4 or claim 5, wherein generating one or more tokens comprises encrypting another token associated with the stable alias, wherein generating one or more tokens optionally comprises encrypting the second token to generate the third token.

7. The method of claim 6, wherein encrypting another token associated with the stable alias comprises encrypting another token using a first key of a pair of keys, wherein the method further comprises either:
receiving the first key; or
generating the pair of keys and sending a second key of the pair of keys to the client.

8. The method of any of claims 4 to 7, further comprising:
receiving a public address or network token associated with the user account; and
determining the stable alias associated with the user account, based on the public address or network token,
wherein the one or more generated tokens are provided to the client in response to receiving the public address or network token from the client.

9. The method of claim 8, wherein determining the stable alias associated with the user account comprises:
determining a service provider of the user account by comparing the public address of the user account with a lookup table of public addresses and/or ranges of public addresses, each public address or range of public addresses being stored in association with a corresponding service provider selected from a plurality of service providers;
sending the public address to the corresponding service provider of the user account; and
receiving the stable alias from the service provider.

10. The method of any preceding claim, further comprising:
receiving preferences in relation to a user account, wherein the preferences indicate that data stored in association with tokens provided to a particular client should not be linked to the stable alias associated with the user account, and disassociating one or more tokens provided to the particular client from the stable alias; and/or
receiving preferences in relation to a user account, wherein the preferences indicate that data stored in association with tokens provided to all clients should not be linked to the stable alias associated with the user account, and disassociating every token provided to any client from the stable alias; and/or
receiving preferences in relation to a user account, wherein the preferences indicate that tokens should not be stored in association with the stable alias associated with the user account, receiving a public address associated with the user account, determining that the public address is associated with the stable alias of the user account, and, in response to determining that the public address is associated with the stable alias of the user account, not generating a token, not storing a token in associating with the stable alias, and/or not providing a token to the client;
receiving preferences in relation to a user account, wherein the preferences indicate that network identification may be undertaken, the method further comprising receiving a public address or network token associated with the user account, and determining a stable alias associated with the user account, based on the public address or network token; and/or
receiving preferences in relation to a user account, wherein the preferences indicate that network identification may not be undertaken, the method further comprising not determining a stable alias associated with the user account based on a public address or network token received associated with the user account; and/or
receiving a request to refresh one or more tokens associated with a user account, disassociating the one or more tokens from the stable alias associated with the user account, generating one or more new tokens, and storing the one or more new tokens in association with the stable alias; and/or
receiving preferences in relation to a user account, wherein the preferences comprise preferences in relation to the client, wherein the client is a first client, such as a content supplier, wherein the preferences further comprise preferences in relation to a second client, such as a web server, wherein, if the preferences in relation to the first client indicate that the first client is not permitted to link tokens with data, not sending the second token to the first client or instructing the first client to cease associating data with the user account, wherein, if the preferences in relation to the second client indicate that the second client is not permitted to provide relevant content to the user account, not providing the third token to the second client.

11. The method of claim 10, wherein the preferences in relation to the user account and/or the request to refresh one or more tokens associated with the user account are received via a user interface provided by the server, such that a user of the user account is able to securely provide the preferences in relation to the user account and/or the request to refresh one or more tokens associated with the user account via the user interface.

12. A method of supplying content to a web server, wherein the web server hosts a website, and wherein the content is relevant to a user account requesting the website from the web server, the method comprising:
optionally receiving data comprising the second token from a server configured to perform the method of any preceding claim;
determining content that is relevant to a user account, based on data associated with a first token generated by a server configured to perform the method of any preceding claim and/or a second token generated by the server configured to perform the method of any preceding claim;
receiving a third token associated with a user account requesting the webpage from the web server, wherein the third token is formed by the server configured to perform the method of any preceding claim by encrypting the second token using a first key of a pair of encryption keys;
decrypting the third token using a second key of the pair of encryption keys to provide the second token, and linking the third token with the data associated with the user account; and
sending the content that is relevant to the user account to the web server.

13. A method of a web server providing relevant content to a user account, the method comprising:
receiving, from a user account, a request for a website hosted by the web server, wherein the website comprises one or more portions in which relevant content may be provided to the user account;
receiving, from a server configured to perform the method of any of claims 1 to 11, one or more tokens associated with the user account, each token corresponding to a respective portion of the website;
sending the one or more tokens to one or more content servers, so that each content server can link the token with data and determine content that is relevant to the user account, based on the data;
receiving the relevant content from the one or more content servers; and
sending the relevant content to the user account.

14. The method of claim 13, wherein the method further comprises:
receiving a public address or network token associated with the user account; and
sending the public address or network token to the server configured to perform the method of any of claims 1 to 11,
wherein the one or more tokens associated with the user account are received in response to sending the public address or network token to the server configured to perform the method of any of claims 1 to 11.

15. A method of a server propagating preferences associated with a user account to one or more clients, the method comprising:
receiving the preferences associated with the user account;
determining a token associated with the user account; and
sending the token in association with the preferences to the one or more clients.

16. The method of claim 15:
wherein the token is an anonymous token; and/or
wherein determining a token associated with the user account comprises determining a stable alias associated with the user account and determining a token associated with the stable alias, and wherein sending the token in association with the preferences to the one or more clients enables the one or more clients to link the token to the preferences, without knowledge of the stable alias; and/or
wherein the client is a first client, wherein determining a token associated with the user account comprises generating the token and optionally storing the token in association with the stable alias, wherein the method further comprises providing the token to a second client; and/or
wherein, if the preferences indicate that network identification may be undertaken, the method further comprises receiving a public address or network token associated with the user account, and determining a stable alias associated with the user account, based on the public address or network token; and/or
wherein, if the preferences indicate that network identification may not be undertaken, the method further comprises not determining a stable alias associated with the user account based on a public address or network token received associated with the user account.

17. A method of processing an offer to supply content to a web server, wherein the web server hosts a website, and wherein a user account is requesting the website from the web server, the method comprising:
receiving a token associated with the user account and preferences associated with the user account;
storing the preferences in association with the token;
receiving, from the web server, an offer to supply content to the web server, wherein either:
a) the offer to supply content comprises the stored token; or
b) the offer to supply content comprises another token associated with the user account, wherein the method further comprises decrypting the another token to provide the stored token;
if the stored preferences associated with the stored token indicate that tokens associated with the user account should be linked to other tokens associated with the user account and data stored in association with the other tokens, linking the token with the data, determining content that is relevant to the user account based on the data, and sending the content that is relevant to the user account to the web server; and/or
if the preferences indicate that tokens associated with the user account should not be linked to other tokens associated with the user account and/or data associated with the user account, not linking the token with other tokens and/or data associated with the user account, and not sending content that is relevant to the user account to the web server; and/or
if the stored preferences associated with the stored token indicate that data associated with the user account should not be stored, deleting data and/or tokens associated with the user account.

18. A server configured to perform the method of any preceding claim.

19. Computer software comprising instructions that, when executed on a processor of a computer, cause the computer to perform the method of any of claims 1 to 17.

## Amended claims

### Amended claims in accordance with Rule 137(2) EPC.

1. A method of a server (100) enabling a client (110) to link data with a token associated with a user account, the method comprising:
receiving a public address or network token associated with the user account;
determining a stable alias associated with the user account, based on the public address or network token;
generating one or more tokens associated with the user account, wherein the one or more tokens comprise a first token and a second token;
storing each of the one or more tokens in association with the stable alias;
receiving the first token from the client (110);
determining the stable alias associated with the first token; and
determining the second token associated with the stable alias; and
providing the second token to the client (110),
wherein one of the first token and the second token are associated with data, such that providing the second token to the client (110) enables the client (110) to link the other of the first token and the second token with the data, without knowledge of the stable alias.

2. The method of claim 1, wherein receiving the first token comprises receiving data relating to the user account, wherein the data comprises the first token, wherein the method further comprises manipulating the data by replacing the first token with the second token so that the manipulated data comprises the second token, wherein providing the second token to the client (110) comprises providing the manipulated data comprising the second token to the client (110).

3. The method of claim 1 or claim 2, wherein the data comprises one or more of:
categorisation data; and
user activity data.

4. The method of any preceding claim, wherein the method further comprises:
providing the one or more generated tokens to the client (110) and/or one or more other clients.

5. The method of claim 4, wherein providing the one or more generated tokens to the client and/or one or more other clients comprises providing the first token to the client.

6. The method of claim 4 or claim 5, wherein the client is a first client (110), wherein generating one or more tokens associated with the user account comprises generating a third token, wherein providing the one or more generated tokens to the client (110) and/or one or more other clients comprises providing the third token to a second client (130).

7. The method of any of claims 4 to 6, wherein generating one or more tokens comprises encrypting another token associated with the stable alias.

8. The method of claim 7, wherein generating one or more tokens comprises encrypting the second token to generate the third token.

9. The method of claim 7 or claim 8, wherein encrypting another token associated with the stable alias comprises encrypting another token using a first key of a pair of keys, wherein the method further comprises either:
receiving the first key; or
generating the pair of keys and sending a second key of the pair of keys to the client (110).

10. The method of any of claims 5 to 9, wherein the one or more generated tokens are provided to the client (110) in response to receiving the public address or network token from the client (110).

11. The method of claim 10, wherein determining the stable alias associated with the user account comprises:
determining a service provider of the user account by comparing the public address of the user account with a lookup table of public addresses and/or ranges of public addresses, each public address or range of public addresses being stored in association with a corresponding service provider selected from a plurality of service providers;
sending the public address to the corresponding service provider of the user account; and
receiving the stable alias from the service provider.

12. The method of any preceding claim, further comprising:
receiving preferences in relation to a user account, wherein the preferences indicate that data stored in association with tokens provided to a particular client should not be linked to the stable alias associated with the user account, and disassociating one or more tokens provided to the particular client from the stable alias; and/or
receiving preferences in relation to a user account, wherein the preferences indicate that data stored in association with tokens provided to all clients should not be linked to the stable alias associated with the user account, and disassociating every token provided to any client from the stable alias; and/or
receiving preferences in relation to a user account, wherein the preferences indicate that tokens should not be stored in association with the stable alias associated with the user account, receiving a public address associated with the user account, determining that the public address is associated with the stable alias of the user account, and, in response to determining that the public address is associated with the stable alias of the user account, not generating a token, not storing a token in associating with the stable alias, and/or not providing a token to the client (110);
receiving preferences in relation to a user account, wherein the preferences indicate that network identification may be undertaken, the method further comprising receiving a public address or network token associated with the user account, and determining a stable alias associated with the user account, based on the public address or network token; and/or
receiving preferences in relation to a user account, wherein the preferences indicate that network identification may not be undertaken, the method further comprising not determining a stable alias associated with the user account based on a public address or network token received associated with the user account; and/or
receiving a request to refresh one or more tokens associated with a user account, disassociating the one or more tokens from the stable alias associated with the user account, generating one or more new tokens, and storing the one or more new tokens in association with the stable alias; and/or
receiving preferences in relation to a user account, wherein the preferences comprise preferences in relation to the client (110), wherein the client is a first client (110), such as a content supplier, wherein the preferences further comprise preferences in relation to a second client (130), such as a web server, wherein, if the preferences in relation to the first client indicate that the first client is not permitted to link tokens with data, not sending the second token to the first client or instructing the first client to cease associating data with the user account, wherein, if the preferences in relation to the second client indicate that the second client is not permitted to provide relevant content to the user account, not providing the third token to the second client.

13. The method of claim 12, wherein the preferences in relation to the user account and/or the request to refresh one or more tokens associated with the user account are received via a user interface provided by the server (100), such that a user of the user account is able to securely provide the preferences in relation to the user account and/or the request to refresh one or more tokens associated with the user account via the user interface.

14. A server (100) configured to perform the method of any preceding claim.

15. Computer software comprising instructions that, when executed on a processor of a computer, cause the computer to perform the method of any of claims 1 to 13.
